# EUROPEAN PATENT APPLICATION

(11) **EP 2 348 391 A1**
(43) Date of publication of application: **27.07.2011**
(21) Application number: 09844822.8
(22) Date of filing: 02.12.2009
(51) Int. Cl.: G06F 3/044, G09G 3/20

(54) **TOUCH-CONTROL FLAT PANEL DISPLAY AND DRIVING CIRCUIT THEREOF**

(30) Priority: 21.05.2009 CN 200910203535
(71) Applicant: Inferpoint Systems (Shenzhen) Limited, Shenzhen, Guangdong 518052 (CN); Inferpoint Systems Limited, Road Town, Tortola (VG)
(72) Inventor: CHEN, Qiliang, Guangdong 518052 (CN); LIU, Haiping, Guangdong 518052 (CN)
(74) Representative: Moore, Graeme Patrick
(86) International application number: PCT/CN2009/075266
(87) International publication number: WO 2010/133070

(57) **Abstract**

A touch-control flat panel display (1600) is consist of a screen (1610) and a driving circuit (1620). In the driving circuit (1620), a touch-control excitation source (1623) which provides energy for touch-control excitation is connected with the power ends (162410, 162420, ..., 1624N0) of the last level of the driving unit in the driving circuit (1620). Outputs of the last level of the driving unit are connected with the electrode lines of the screen. The touch-control circuit (1625) judges whether the electrode lines of the screen are touched or not by detecting the change of touch-control signal of the power ends (162410, 162420, ..., 1624N0) or outputs of the last level of the driving unit. Therefore the effect of a distributed capacitance in the driving circuit (1620) on touch-control signal is prevented.

## Description

### BACKGROUND OF THE INVENTION

### Field of the Invention

The present invention relates to a touch screen and a flat panel display, and more particularly, to a touch flat panel display.

### Related Art

China Patent Application No. 2006100948141 entitled "TOUCH FLAT PANEL DISPLAY" discloses a connection manner between a touch system circuit and electrodes of a display screen, in which an analog switch is used to enable the electrodes of the display screen to transmit a display driving signal, or transmit and sense a touch signal, display driving and touch detection time division multiplex the electrodes of the display screen, and the electrodes of the display screen are used for both display driving and touch detection. China Patent Application No. 2006101065583 entitled "FLAT PANEL DISPLAY HAVING TOUCH FUNCTION" discloses another connection manner between a touch system circuit and electrodes of a display screen, in which a display/touch signal loading and merge circuit is used to enable the electrodes of the display screen to transmit a display driving signal and to transmit and sense a touch signal simultaneously, display driving and touch detection share the electrodes of the display screen simultaneously, and the electrodes of the display screen are used for both display driving and touch detection.

The electrodes of the display screen are utilized to detect and position a touch, that is, practically to detect a tiny electrical signal leaked by a coupling capacitance between a touch object and the electrodes of the display screen. The touch system circuit is connected with a display driving circuit, and the coupling capacitance between the touch object and the electrodes of the display screen is rather tiny, so that the touch detection is very sensitive to a distributed capacitance and a parasitic capacitance within the display driving circuit, and a distributed capacitance on a connection circuit for the touch system circuit and the display driving circuit. A reasonable connection solution for the touch system circuit and the display driving circuit and a reasonable sampling point configuration are crucial to eliminating the interference from the distributed capacitance and the parasitic capacitance, and utilizing the electrodes of the display screen to detect and position the touch, so as to integrate the flat panel display and the touch screen, and thus enable a flat panel display to become a touch flat panel display.

Further, it is a worthwhile task to seek a reasonable connection between the touch system circuit and the display driving circuit, so as to control the cost of realizing the touch flat panel display.

### SUMMARY OF THE INVENTION

Accordingly, the present invention is directed to a structural relation of circuits between a touch system circuit, a display driving circuit, and electrodes of a display screen, so as to implement simple and reasonable connection between touch excitation, display driving, and electrode lines of the display screen, as well as effective touch detection.

The following technical solution is provided to solve the technical problems of the present invention.

A touch flat panel display includes a display screen and a driving circuit, the driving circuit includes a display driving circuit and a touch system circuit, and output ends of the driving circuit are connected with electrode lines of the display screen respectively. A touch excitation source providing touch excitation energy is connected with a power end of a last-stage driving cell of the driving circuit; the last-stage driving cell at least has one active element, and an output end thereof is connected with an electrode line of the display screen; and the touch system circuit judges whether the electrode line of the display screen connected with the driving unit is touched by detecting a change of a touch signal flowing through the power end or the output end of the last-stage driving cell.

The following technical solutions are further provided to solve the technical problems of the present invention.

The power end of the driving unit in the driving circuit connected with the touch excitation source may be a positive power end of the driving unit, or a negative power end of the driving unit.

The power end of the last-stage driving cell in the driving circuit connected with the electrode lines of the display screen are connected with a display driving source providing display driving energy and the touch excitation source providing the touch excitation energy through a display/touch signal gating-switch and output circuit respectively, and the display/touch signal gating-switch and output circuit enables the power end of the driving unit to communicate with the display driving source, so that the driving circuit transmits a display driving signal to the connected electrode line of the display screen; or to communicate with the touch excitation source, so that the driving circuit transmits a touch signal to the connected electrode line of the display screen.

A detection point of the touch system circuit for detecting the touch signal is disposed between the touch excitation source and the display/touch signal gating-switch and output circuit, or disposed between the display/touch signal gating-switch and output circuit and the power end of the driving unit, or disposed between multi-stage multiplexers, or disposed at the output end of the driving unit.

Power ends of different driving units in the driving circuit connected with different electrode lines of the display screen are connected with a display driving source providing display driving energy and the touch excitation source providing the touch excitation energy through a display/touch signal loading and merge circuit unit respectively, and the driving circuit transmits a display driving signal and the touch signal to a connected next stage circuit and finally to the electrode lines of the display screen simultaneously.

The display/touch signal loading and merge circuit is connected with the touch excitation source through a multiplexer or directly connected with the touch excitation source.

A detection point of the touch system circuit for detecting the touch signal is disposed between the touch excitation source and the display/touch signal loading and merge circuit, or disposed between the multiplexer and the display/touch signal loading and merge circuit, or disposed between the display/touch signal loading and merge circuit and the power end of the driving unit, or disposed at the output end of the driving unit.

The touch excitation source providing the touch excitation energy and the display driving source providing the display driving energy share the same power supply, the power end of the driving unit in the driving circuit is connected with a display driving and touch excitation sharing source, and the driving circuit transmits a display driving signal and the touch signal to a connected next stage circuit and finally to the electrode lines of the display screen simultaneously or in different time.

The power end of the driving unit in the driving circuit connected with the electrode line of the display screen is connected with the display driving and touch excitation sharing source through a display/touch signal gating-switch and output circuit or directly connected with the display driving and touch excitation sharing source.

A detection point of the touch system circuit for detecting the touch signal is disposed between the display driving and touch excitation sharing source and a multiplexer, or disposed between the display/touch signal gating-switch and output circuit and the power end of the driving unit, or disposed between the display driving and touch excitation sharing source and the power end of the driving unit, or disposed at the output end of the driving unit.

The display driving and touch excitation sharing source is an independent power supply without being connected with other parts of the driving circuit, or an independent output end in a power output end without being connected with other parts of the driving circuit.

The display/touch signal gating-switch and output circuit is a single-stage or multi-stage multiplexer at least having one active element.

The touch excitation source may be a direct current (DC) power supply, an alternating current (AC) power supply, or a hybrid AC/DC power supply.

The detection point for detecting the touch signal is a potential point or an element for detecting the change of the touch signal.

The multiplexer may be an analog switch, or other circuits having a gating function.

When the touch excitation source is a DC power supply, the output end of the last-stage driving cell in the driving circuit outputs a touch signal alternating with an alternating signal of an input end to the electrode line of the display screen.

When the touch excitation source is an AC power supply, the output end of the last-stage driving cell in the driving circuit outputs an alternating touch signal coming from the power end and gated by an input end to the electrode line of the display screen.

A touch signal sampling circuit of the touch system circuit is a passive element, or an active element, or a circuit unit formed by multiple elements.

A frequency of the touch signal output to the electrode line of the display screen by the output end of the last-stage driving cell of the driving circuit is not smaller than 50 kHz.

The touch system circuit detects the touch signal flowing into the power end of the driving unit connected with the touch excitation source by detecting at least one of a current signal and a voltage signal.

The touch system circuit detects the touch signal flowing into the power end of the driving unit connected with the touch excitation source by detecting at least one of amplitude, time, phase, frequency signal, and pulse number.

Compared with the prior art, the present invention has the following beneficial effects.

The disclosure is a quite specific structural relation of circuits between a touch system circuit, a display driving circuit, and electrodes of a display screen, which makes a reasonable connection between the touch system circuit, the display driving circuit, and the electrodes of the display screen, and even a selection and output circuit portion in the display driving circuit is skillfully utilized, which simplifies the connection between the touch system circuit, the display driving circuit, and the electrodes of the display screen. Through the simple connection manner for the touch system circuit and the display driving circuit, the distributed capacitance on the connection circuit for the touch system circuit and the display driving circuit can also be reduced as much as possible, so as to prevent the interference of the distributed capacitance on the electrical signal leaked by the coupling capacitance between the touch object and the electrodes of the display screen detected by the touch system circuit.

In the disclosed circuit connection manner for the touch system circuit and the display driving circuit according to the present invention, the touch excitation source is connected to the display driving circuit from a port providing the display driving energy in the display driving circuit, that is, the power end of the last-stage driving cell of the driving circuit, and provides a touch excitation signal to the electrodes of the display screen, and even the touch excitation and the display driving share the same energy source, so that the influence of the distributed capacitance and the parasitic capacitance within the preceding stage circuit in the driving circuit on the touch detection can be reduced. The reasonable detection point configuration is also an effective method for reducing the influence of the distributed capacitance and the parasitic capacitance within the driving circuit on the touch detection. Furthermore, the disclosed connection manner can enable different electrode lines of the display screen to communicate with the touch excitation source simultaneously, and can also detect touch signals flowing through the different electrode lines of the display screen respectively. By setting a reasonable condition for judging the touched electrode lines, the touch flat panel display of the present invention can support multi-point touch.

For flat panel displays used by computers or mobile phones, the display screen has a great number of electrodes. When the display driving and the touch detection time division multiplex the electrodes of the display screen, if it is intended to enable the touch flat panel display not to flicker, time occupied by the touch detection must be very short, which, above all, requires to enable the touch excitation source to establish a stable touch signal on the display panel sufficiently quickly. In this case, the touch excitation source is connected to the display driving circuit from the power end of the last-stage driving cell of the driving circuit, and provides a touch excitation signal to the electrodes of the display screen, so as to utilize the driving capability of the last-stage driving cell to establish the stable touch signal on the display panel quickly, which is a simple and effective method.

In the disclosed circuit connection manner for the touch system circuit and the display driving circuit, internal circuit units of the display driving circuit are fully utilized, so that the touch flat panel display can be realized at a low cost.

### BRIEF DESCRIPTION OF THE DRAWINGS

The present invention will become more fully understood from the detailed description given herein below for illustration only, and thus are not limitative of the present invention, and wherein:
FIG. 1 is a schematic view illustrating electrical connection of a first embodiment in the present invention;
FIG. 2 is a schematic view illustrating electrical connection of a second embodiment in the present invention;
FIG. 3 is a schematic view illustrating electrical connection of a third embodiment in the present invention;
FIG. 4 is a schematic view illustrating electrical connection of a fourth embodiment in the present invention;
FIG. 5 is a schematic view illustrating electrical connection of a fifth embodiment in the present invention;
FIG. 6 is a schematic view illustrating electrical connection of a sixth embodiment in the present invention;
FIG. 7 is a schematic view illustrating electrical connection of a seventh embodiment in the present invention;
FIG. 8 is a schematic view illustrating electrical connection of an eighth embodiment in the present invention;
FIG. 9 is a schematic view illustrating electrical connection of a ninth embodiment in the present invention;
FIG. 10 is a schematic view illustrating electrical connection of a tenth embodiment in the present invention;
FIG. 11 is a schematic view illustrating electrical connection of an eleventh embodiment in the present invention;
FIG. 12 is a schematic view illustrating electrical connection of a twelfth embodiment in the present invention;
FIG. 13 is a schematic view illustrating electrical connection of a thirteenth embodiment in the present invention;
FIG. 14 is a schematic view illustrating electrical connection of a fourteenth embodiment in the present invention;
FIG. 15 is a schematic view illustrating electrical connection of a fifteenth embodiment in the present invention;
FIG. 16 is a schematic view illustrating electrical connection of a sixteenth embodiment in the present invention;
FIG. 17 is a schematic view illustrating electrical connection of a fifteenth embodiment in the present invention;
FIG. 18 is a schematic view illustrating electrical connection of a fifteenth embodiment in the present invention; and
FIG. 19 is a schematic view illustrating electrical connection of a fifteenth embodiment in the present invention.

### DETAILED DESCRIPTION OF THE INVENTION

Currently, many types of flat panel displays are available in market. Take a liquid crystal display (LCD) for example, for a passive LCD such as a Twist Nematic (TN) LCD (TN-LCD) and a Super Twist Nematic (STN) LCD (STN-LCD), normally display scanning electrode lines or display signal electrode lines (that is, the row electrode lines) are provided on a lower substrate glass, display signal electrode lines or display scanning electrode lines (that is, the column electrode lines) are provided on an upper substrate glass, and intersections thereof are display pixels. An active LCD such as a Thin Film Transistor (TFT) LCD (TFT-LCD) normally includes a TFT array and a display pixel array located on substrate glass, display scanning electrode lines (that is, the row electrode lines) connected with gates of the TFTs, display signal electrode lines (that is, the column electrode lines) connected with sources or drains of the TFTs, and a color filter and common electrodes located on another substrate glass. Other flat panel displays such as a plasma display panel (PDP), active and passive organic light emitting diode (OLED) displays are also provided with display scanning electrode lines and display signal electrode lines (that is, the row and column electrode lines).

The touch flat panel display disclosed in the present invention includes a display screen and a driving circuit, in which the driving circuit further includes a display driving circuit and a touch system circuit. Output ends of the driving circuit are respectively connected with electrode lines of the display screen. The touch system circuit connected with the display driving circuit implements touch detection of column and row electrode lines of the flat panel display; display driving and touch detection multiplex the display screen electrodes, thus enabling the flat panel display to display normally and to implement touch detection at the same time.

### First Embodiment

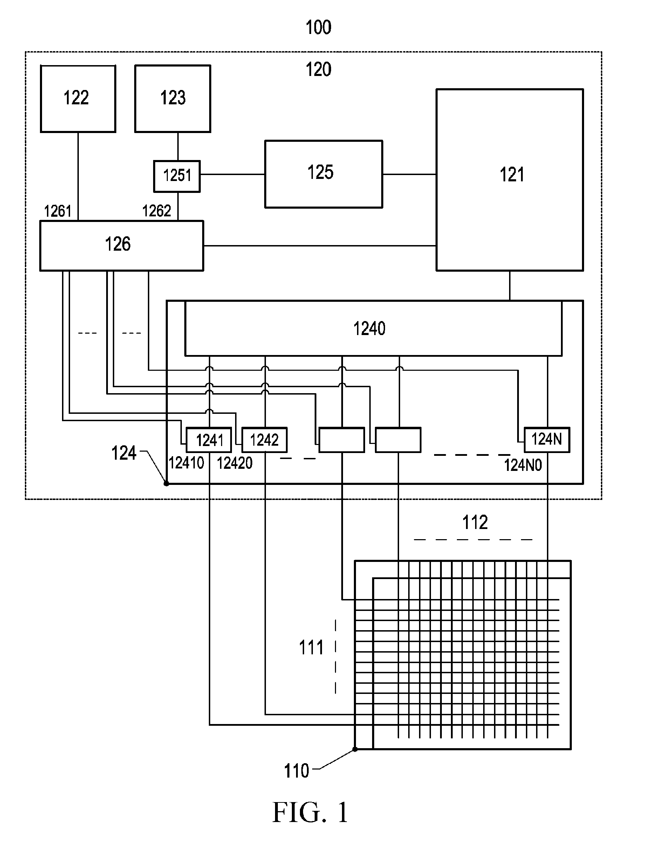

A touch flat panel display 100 as shown in FIG. 1 includes a display screen 110 and a driving circuit 120. The driving circuit 120 includes a control circuit 121, a display driving source 122 providing display driving energy, a touch excitation source 123 providing touch excitation energy, a display gating and output circuit 124, a touch system circuit 125, and a display/touch signal gating-switch and output circuit 126. The display screen 110 has column electrodes 111 and row electrodes 112. For last-stage driving cells 1241, 1242, ..., and 124N of the display gating and output circuit 124, that is, last-stage driving cells of the driving circuit 120, input ends thereof are connected with a preceding stage circuit 1240, and output ends thereof are connected with electrode lines of the column electrodes 111 and row electrodes 112 of the display screen; power ends thereof 12410, 12420, ..., and 124N0 are connected with output ends of the display/touch signal gating-switch and output circuit 126 respectively, one input end 1261 of the display/touch signal gating-switch and output circuit 126 is connected with the display driving source 122, the other input end 1262 of the display/touch signal gating-switch and output circuit 126 is connected with the touch excitation source 123 through a touch signal sampling unit 1251 of the touch system circuit 125, and output ends of the display/touch signal gating-switch and output circuit 126 communicate with the input end 1261, or communicate with the input end 1262. The touch signal sampling unit 1251 is connected with the touch system circuit 125, and the touch system circuit 125 detects a change of a touch signal on the sampling unit. The control circuit 121 controls the display/touch signal gating-switch and output circuit 126 to enable the power ends 12410, 12420, ..., and 124N0 of the last-stage driving cells 1241, 1242, ..., and 124N to communicate with the display driving source 122, so as to transport a display driving signal to the connected electrode lines of the column electrodes 111 and row electrodes 112 of the display screen; or communicate with the touch excitation source 123, so as to transport a touch signal to the connected electrode lines of the column electrodes 111 and row electrodes 112 of the display screen. Connection lines in FIG. 1 not only represent single line connection, but also represent multiple line connection.

The touch flat panel display works in the following manner.

During the display driving period, the display/touch signal gating-switch and output circuit 126 in the driving circuit 120 enables the power ends 12410, 12420, ..., and 124N0 of the last-stage driving cells 1241, 1242, ..., and 124N to communicate with the display driving source 122, the control circuit 121 controls the display gating and output circuit 124 to transport the display driving signal to the connected column electrodes 111 and row electrodes 112 of the display screen, and the display screen 110 is in a display driving state.

During the touch detection period, the control circuit 121 controls the display/touch signal gating-switch and output circuit 126 to enable the power ends 12410, 12420, ..., and 124N0 of the last-stage driving cells 1241, 1242, ..., and 124N to communicate with the touch excitation source 123 through the touch signal sampling unit 1251 one by one, and the display gating and output circuit 124 transports the touch signal to the electrode lines of the column electrodes 111 and row electrodes 112 of the display screen one by one. The touch system circuit 125 judges whether the display screen 110 is touched and positions of which column and row electrode lines are touched by detecting the change of the touch signal on the touch signal sampling unit 1251, and the display screen 110 is in a touch detection state. The position of the touched point is determined according to the detected intersection point of the touched row electrode line and touched column electrode line.

The touch flat panel display 100 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The display/touch signal gating-switch and output circuit that enables the electrodes of the display screen to communicate with the display driving circuit to transmit display driving signals or to communicate with the touch system circuit to transmit touch signals may be a multichannel analog switch or other circuits having a gating function.

The touch signal sampling unit is a single passive device such as a resistor, capacitor, or inductor, a combination of multiple passive devices, a single active device, or a circuit unit having active devices.

### Second Embodiment

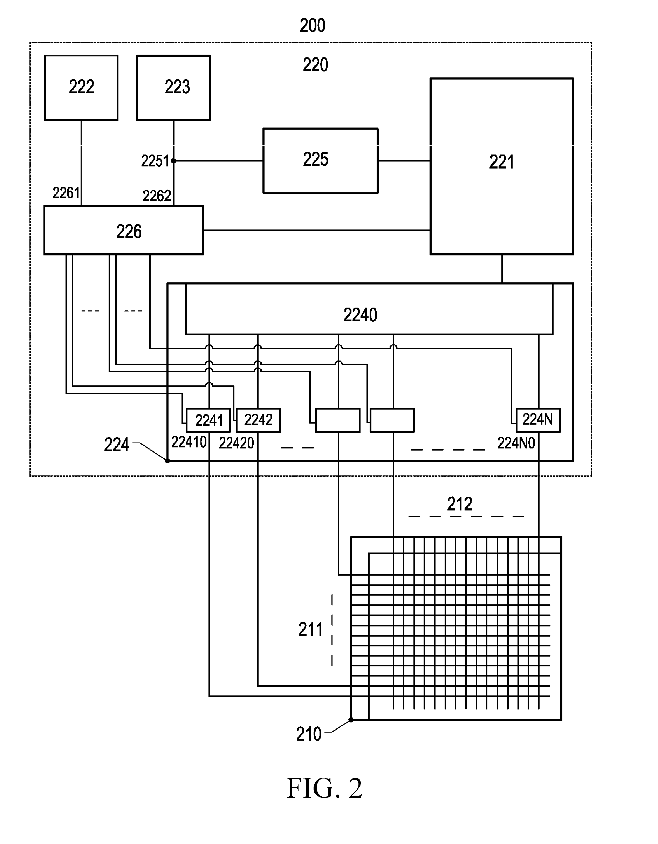

A touch flat panel display 200 as shown in FIG. 2 includes a display screen 210 and a driving circuit 220. The driving circuit 220 includes a control circuit 221, a display driving source 222 providing display driving energy, a touch excitation source 223 providing touch excitation energy, a display gating and output circuit 224, a touch system circuit 225, and a display/touch signal gating-switch and output circuit 226. The display screen 210 has column electrodes 211 and row electrodes 212. For last-stage driving cells 2241, 2242, ..., and 224N of the display gating and output circuit 224, that is, last-stage driving cells of the driving circuit 220, input ends thereof are connected with a preceding stage circuit 2240, and output ends thereof are connected with electrode lines of the column electrodes 211 and row electrodes 212 of the display screen; power ends thereof 22410, 22420, ..., and 224N0 are connected with output ends of the display/touch signal gating-switch and output circuit 226 respectively, one input end 2261 of the display/touch signal gating-switch and output circuit 226 is connected with the display driving source 222, the other input end 2262 of the display/touch signal gating-switch and output circuit 226 is connected with the touch excitation source 223, and output ends of the display/touch signal gating-switch and output circuit 226 communicate with the input end 2261, or communicate with the input end 2262. A detection point 2251 of the touch system circuit 225 is disposed between the input end 2262 of the display/touch signal gating-switch and output circuit 226 and the touch excitation source 223, and is connected with the touch system circuit 225. The touch system circuit 225 detects a change of a potential on the detection point, and a reference endpoint for potential measurement is disposed at a common ground end of the driving circuit 220, or a specific reference point of the driving circuit 220. The control circuit 221 controls the display/touch signal gating-switch and output circuit 226 to enable the power ends 22410, 22420, ..., and 224N0 of the last-stage driving cells 2241, 2242, ..., and 224N to communicate with the display driving source 222, so as to transport a display driving signal to the connected electrode lines of the column electrodes 211 and row electrodes 212 of the display screen; or communicate with the touch excitation source 223, so as to transport a touch signal to the connected electrode lines of the column electrodes 211 and row electrodes 212 of the display screen. Connection lines in FIG. 2 not only represent single line connection, but also represent multiple line connection.

The touch flat panel display works in the following manner.

During the display driving period, the display/touch signal gating-switch and output circuit 226 in the driving circuit 220 enables the power ends 22410, 22420, ..., and 224N0 of the last-stage driving cells 2241, 2242, ..., and 224N to communicate with the display driving source 222, the control circuit 221 controls the display gating and output circuit 224 to transport the display driving signal to the connected column electrodes 211 and row electrodes 212 of the display screen, and the display screen 210 is in a display driving state.

During the touch detection period, the control circuit 221 controls the display/touch signal gating-switch and output circuit 226 to enable the power ends 22410, 22420, ..., and 224N0 of the last-stage driving cells 2241, 2242, ..., and 224N to communicate with the touch excitation source 223 through the detection point 2251 of the touch system circuit 225 one by one, and the display gating and output circuit 224 transports the touch signal to the electrode lines of the column electrodes 211 and row electrodes 212 of the display screen one by one. The touch system circuit 225 judges whether the display screen 210 is touched and positions of which column and row electrode lines are touched by detecting the change of the touch signal on the detection point 2251, and the display screen 210 is in a touch detection state. The position of the touched point is determined according to the detected intersection point of the touched row electrode line and touched column electrode line.

The touch flat panel display 200 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The display/touch signal gating-switch and output circuit that enables the electrodes of the display screen to communicate with the display driving circuit to transmit display driving signals or to communicate with the touch system circuit to transmit touch signals may be a multichannel analog switch or other circuits having a gating function.

### Third Embodiment

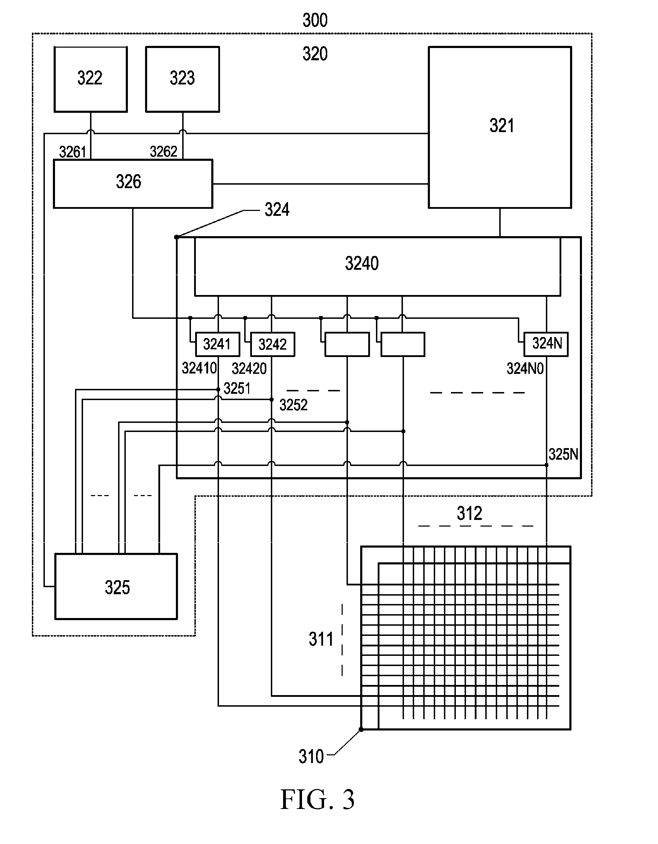

A touch flat panel display 300 as shown in FIG. 3 includes a display screen 310 and a driving circuit 320. The driving circuit 320 includes a control circuit 321, a display driving source 322 providing display driving energy, a touch excitation source 323 providing touch excitation energy, a display gating and output circuit 324, a touch system circuit 325, and a display/touch signal gating-switch and output circuit 326. The display screen 310 has column electrodes 311 and row electrodes 312. For last-stage driving cells 3241, 3242, ..., and 324N of the display gating and output circuit 324, that is, last-stage driving cells of the driving circuit 320, input ends thereof are connected with a preceding stage circuit 3240, and output ends thereof are connected with electrode lines of the column electrodes 311 and row electrodes 312 of the display screen; power ends thereof 32410, 32420, ..., and 324N0 are connected with output ends of the display/touch signal gating-switch and output circuit 326 respectively, one input end 3261 of the display/touch signal gating-switch and output circuit 326 is connected with the display driving source 322, the other input end 3262 of the display/touch signal gating-switch and output circuit 326 is connected with the touch excitation source 323, and output ends of the display/touch signal gating-switch and output circuit 326 communicate with the input end 3261, or communicate with the input end 3262. Detection points 3251, 3252, ..., and 325N of the touch system circuit 325 are disposed at respective output ends of the last-stage driving cells 3241, 3242, ..., and 324N of the display gating and output circuit 324, and are connected with the touch system circuit 325. The touch system circuit 325 detects changes of potentials on the detection points, and a reference endpoint for potential measurement is disposed at an output end of the touch excitation source 323, a common ground end of the driving circuit 320, or a specific reference point of the driving circuit 320. The control circuit 321 controls the display/touch signal gating-switch and output circuit 326 to enable the power ends 32410, 32420, ..., and 324N0 of the last-stage driving cells 3241, 3242, ..., and 324N to communicate with the display driving source 322, so as to transport a display driving signal to the connected electrode lines of the column electrodes 311 and row electrodes 312 of the display screen; or communicate with the touch excitation source 323, so as to transport a touch signal to the connected electrode lines of the column electrodes 311 and row electrodes 312 of the display screen. Connection lines in FIG. 3 not only represent single line connection, but also represent multiple line connection.

The touch flat panel display works in the following manner.

During the display driving period, the display/touch signal gating-switch and output circuit 326 in the driving circuit 320 enables the power ends 32410, 32420, ..., and 324N0 of the last-stage driving cells 3241, 3242, ..., and 324N to communicate with the display driving source 322, the control circuit 321 controls the display gating and output circuit 324 to transmit the display driving signal to the connected column electrodes 311 and row electrodes 312 of the display screen, and the display screen 310 is in a display driving state.

During the touch detection period, the control circuit 321 controls the display/touch signal gating-switch and output circuit 326 to enable the power ends 32410, 32420, ..., and 324N0 of the last-stage driving cells 3241, 3242, ..., and 324N to communicate with the touch excitation source 323, and the display gating and output circuit 324 transports the touch signal to the electrode lines of the column electrodes 311 and row electrodes 312 of the display screen simultaneously. The touch system circuit 325 judges whether the display screen 310 is touched and positions of which column and row electrode lines are touched by detecting changes of touch signals on the detection points 3251, 3252, ..., and 325N disposed at the output ends of the driving units 3241, 3242, ..., and 324N respectively through simultaneous sampling or scan sampling, and the display screen 310 is in a touch detection state. The position of the touched point is determined according to the detected intersection point of the touched row electrode line and touched column electrode line.

The touch flat panel display 300 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The display/touch signal gating-switch and output circuit that enables the electrodes of the display screen to communicate with the display driving circuit to transmit display driving signals or to communicate with the touch system circuit to transmit touch signals may be a multichannel analog switch or other circuits having a gating function.

### Fourth Embodiment

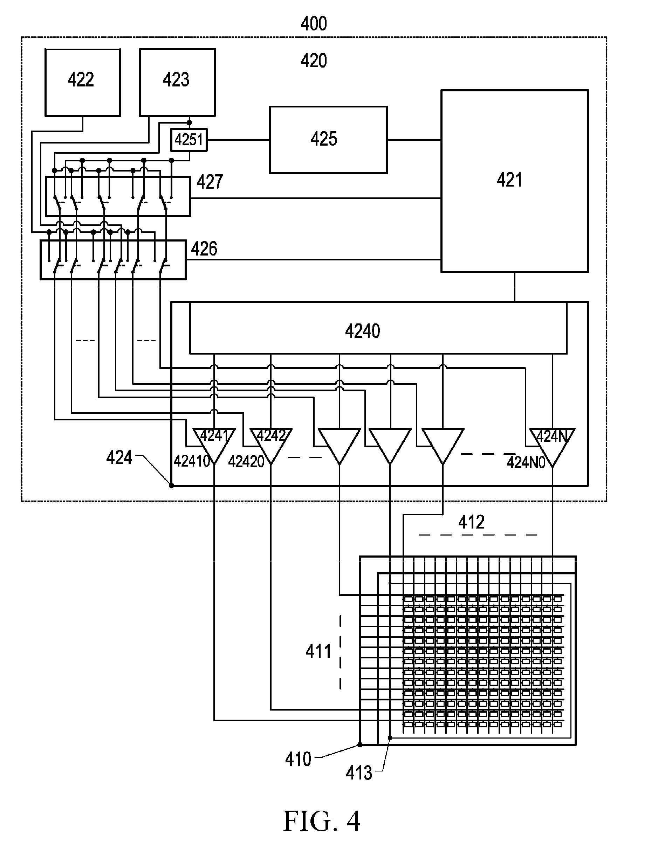

A touch flat panel display 400 as shown in FIG. 4 includes a TFT active display screen 410 and a driving circuit 420. The driving circuit 420 includes a control circuit 421, a display driving source 422 providing display driving energy, a touch excitation source 423 providing touch excitation energy, a display gating and output circuit 424, a touch system circuit 425, and analog switch groups 426 and 427. The display screen 410 has column electrodes 411, row electrodes 412, and common electrodes 413. For operational amplifiers 4241, 4242, ..., and 424N as last-stage driving cells of the display gating and output circuit 424, that is, last-stage driving cells of the driving circuit 420, input ends thereof are connected with a preceding stage circuit 4240, output ends thereof are connected with electrode lines of the column electrodes 411 and row electrodes 412 and the common electrodes 413 of a TFT array of the display screen; power ends thereof 42410, 42420, ..., and 424N0 are connected with output ends of the analog switch group 426, one input end of each switch of the analog switch group 426 is connected with the display driving source 422, and the other input end of each switch of the analog switch group 426 is connected with an output end of the analog switch group 427; one input end of each switch of the analog switch group 427 is connected with the touch excitation source 423 through a touch sampling element 4251 of the touch system circuit 425, and the other input end is directly connected with the touch excitation source 423. The touch sampling element 4251 is connected with the touch system circuit 425, and the touch system circuit 425 detects a change of a touch signal on the sampling element 4251. The control circuit 421 controls the analog switch groups 426 and 427 to enable the power ends 42410, 42420, ..., and 424N0 of the operational amplifiers 4241, 4242, ..., and 424N as the last-stage driving cells, to communicate with the display driving source 422, so as to transport a display driving signal to the connected electrode lines of the column electrodes 411 and row electrodes 412 and the common electrodes 413 of the display screen; or communicate with the touch excitation source 423, so as to transport a touch signal to the connected electrode lines of the column electrodes 411 and row electrodes 412 and the common electrodes 413 of the display screen. Connection lines in FIG. 4 not only represent single line connection, but also represent multiple line connection.

The touch flat panel display works in the following manner.

During the display driving period, the analog switch group 426 in the driving circuit 420 enables the power ends 42410, 42420, ..., and 424N0 of the operational amplifiers 4241, 4242, ..., and 424N as the last-stage driving cells to communicate with the display driving source 422, the control circuit 421 controls the display gating and output circuit 424 to transport the display driving signal to the connected electrodes 411 and 412 and common electrodes 413 of the display screen, and the display screen 410 is in a display driving state.

During the touch detection period, the control circuit 421 controls the analog switch group 426 to enable the power ends 42410, 42420, ..., and 424N0 of the operational amplifiers 4241, 4242, ..., and 424N as the last-stage driving cells to communicate with the analog switch group 427, and then, through the analog switch group 427, to enable a power end of only one last-stage driving cell or power ends of a plurality of last-stage driving cells each time to communicate with the touch excitation source 423 through the touch sampling element 4251; power ends of the other last-stage driving cells directly communicate with the touch excitation source 423; the display gating and output circuit 424 transports the touch signal to the electrode lines of the column electrodes 411 and row electrodes 412 and the common electrodes 413 of the display screen simultaneously. The touch system circuit 425 judges whether the display screen 410 is touched and positions of which column and row electrode lines are touched by detecting the change of the touch signal on the touch sampling element 4251 successively, and the display screen 410 is in a touch detection state. The position of the touched point is determined according to the detected intersection point of the touched row electrode line and touched column electrode line.

The touch flat panel display 400 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The touch signal sampling unit is a single passive device such as a resistor, capacitor, or inductor, a combination of multiple passive devices, a single active device, or a circuit unit having active devices.

### Fifth Embodiment

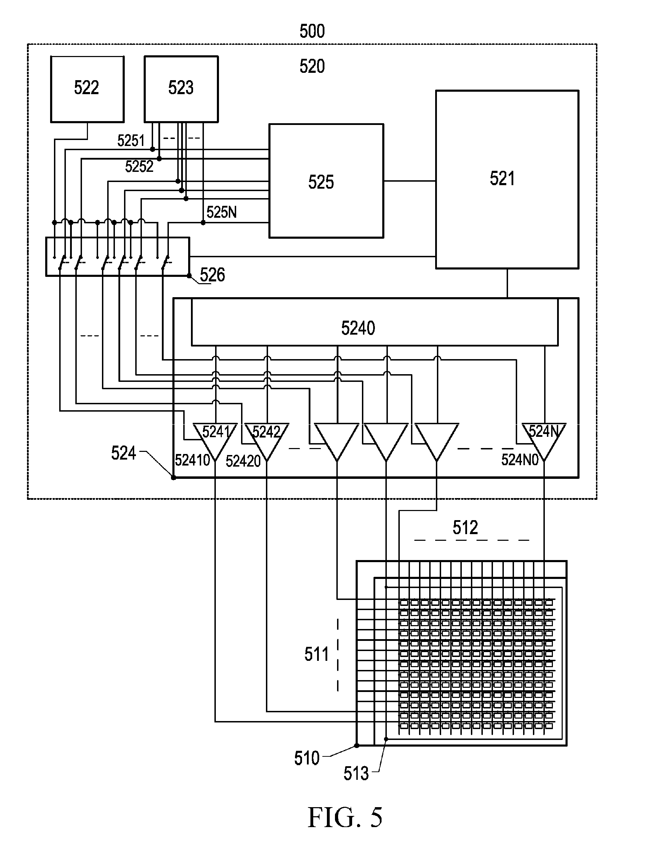

A touch flat panel display 500 as shown in FIG. 5 includes a TFT active display screen 510 and a driving circuit 520. The driving circuit 520 includes a control circuit 521, a display driving source 522 providing display driving energy, a touch excitation source 523 providing touch excitation energy, a display gating and output circuit 524, a touch system circuit 525, and an analog switch group 526. The display screen 510 has column electrodes 511, row electrodes 512, and common electrodes 513. For operational amplifiers 5241, 5242, ..., and 524N as last-stage driving cells of the display gating and output circuit 524, that is, last-stage driving cells of the driving circuit 520, input ends thereof are connected with a preceding stage circuit 5240, output ends thereof are connected with electrode lines of the column electrodes 511 and row electrodes 512 and the common electrodes 513 of a TFT array of the display screen; power ends thereof 52410, 52420, ..., and 524N0 are connected with output ends of the analog switch group 526, one input end of each switch of the analog switch group 526 is connected with the display driving source 522, and the other input end of each switch of the analog switch group 526 is connected with the touch excitation source 523. Detection points 5251, 5252, ..., and 525N of the touch system circuit 525 corresponding to the operational amplifiers 5241, 5242, ..., and 524N respectively are disposed between the analog switch group 526 and the touch excitation source 523, and are connected with the touch system circuit 525. The touch system circuit 525 detects changes of potentials on the detection points, and a reference endpoint for potential measurement is disposed at a common ground end of the driving circuit 520, or a specific reference point of the driving circuit 520. The control circuit 521 controls the analog switch group 526 to enable the power ends 52410, 52420, ..., and 524N0 of the operational amplifiers 5241, 5242, ..., and 524N as the last-stage driving cells, to communicate with the display driving source 522, so as to transport a display driving signal to the connected electrode lines of the column electrodes 511 and row electrodes 512 and the common electrodes 513 of the display screen; or communicate with the touch excitation source 523, so as to transport a touch signal to the connected electrode lines of the column electrodes 511 and row electrodes 512 and the common electrodes 513 of the display screen. Connection lines in FIG. 5 not only represent single line connection, but also represent multiple line connection.

The touch flat panel display works in the following manner.

During the display driving period, the analog switch group 526 in the driving circuit 520 enables the power ends 52410, 52420, ..., and 524N0 of the operational amplifiers 5241, 5242, ..., and 524N as the last-stage driving cells to communicate with the display driving source 522, the control circuit 521 controls the display gating and output circuit 524 to transport the display driving signal to the connected electrodes 511 and 512 and the common electrodes 513 of the TFT array of the display screen, and the display screen 510 is in a display driving state.

During the touch detection period, the control circuit 521 controls the analog switch group 526 to enable the power ends 52410, 52420, ..., and 524N0 of the operational amplifiers 5241, 5242, ..., and 524N as the last-stage driving cells to communicate with the touch excitation source 523, and the display gating and output circuit 524 transports the touch signal to the electrode lines of the column electrodes 511 and row electrodes 512 and the common electrodes 513 of the display screen simultaneously. The touch system circuit 525 judges whether the display screen 510 is touched and positions of which column and row electrode lines are touched by detecting changes of touch signals on the sampling points 5251, 5252, ..., and 525N disposed between the analog switch group 526 and the touch excitation source 523 respectively through simultaneous sampling or scan sampling, and the display screen 510 is in a touch detection state. The position of the touched point is determined according to the detected intersection point of the touched row electrode line and touched column electrode line.

The touch flat panel display 500 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Sixth Embodiment

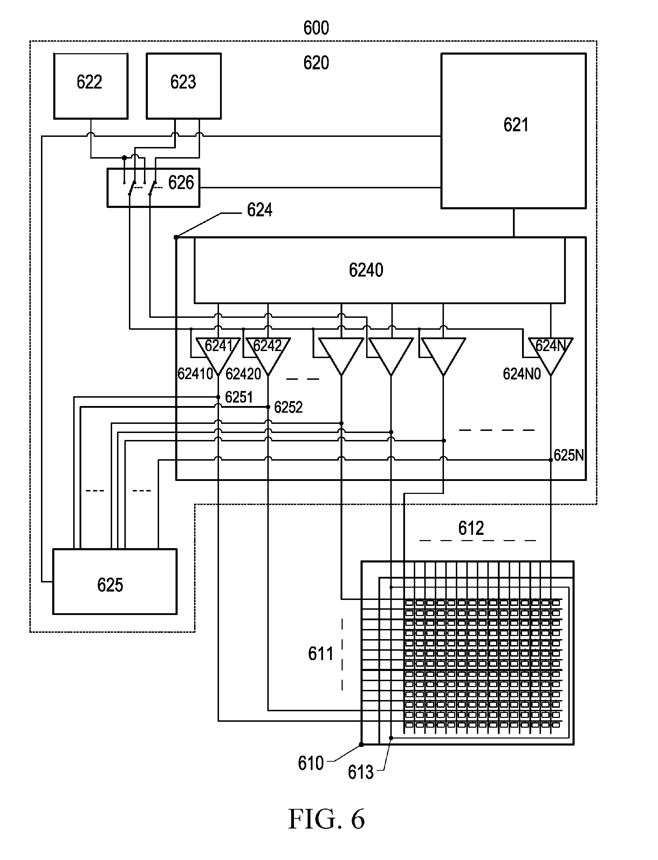

A touch flat panel display 600 as shown in FIG. 6 includes a TFT active display screen 610 and a driving circuit 620. The driving circuit 620 includes a control circuit 621, a display driving source 622 providing display driving energy, a touch excitation source 623 providing touch excitation energy, a display gating and output circuit 624, a touch system circuit 625, and an analog switch group 626. The display screen 610 has column electrodes 611, row electrodes 612, and common electrodes 613. For operational amplifiers 6241, 6242, ..., and 624N as last-stage driving cells of the display gating and output circuit 624, that is, last-stage driving cells of the driving circuit 620, input ends thereof are connected with a preceding stage circuit 6240, output ends thereof are connected with electrode lines of the column electrodes 611 and row electrodes 612 and the common electrodes 613 of a TFT array of the display screen; power ends thereof 62410, 62420, ..., and 624N0 are connected with output ends of the analog switch group 626, one input end of the analog switch group 626 is connected with the display driving source 622, and the other input end of the analog switch group 626 is connected with the touch excitation source 623. Detection sampling points 6251, 6252, ..., and 625N of the touch system circuit 625 are disposed at respective output ends of the operational amplifiers 6241, 6242, ..., and 624N of the last-stage driving cells of the display gating and output circuit 624, and are connected with the touch system circuit 625. The touch system circuit 625 detects changes of potentials on the detection points, and a reference endpoint for potential measurement is disposed at an output end of the touch excitation source 623, a common ground end of the driving circuit 620, or a specific reference point of the driving circuit 620. The control circuit 621 controls the analog switch group 626 to enable the power ends 62410, 62420, ..., and 624N0 of the operational amplifiers 6241, 6242, ..., and 624N as the last-stage driving cells, to communicate with the display driving source 622, so as to transport a display driving signal to the connected electrode lines of the column electrodes 611 and row electrodes 612 and the common electrodes 613 of the display screen; or communicate with the touch excitation source 623, so as to transport a touch signal to the connected electrode lines of the column electrodes 611 and row electrodes 612 and the common electrodes 613 of the display screen. Connection lines in FIG. 6 not only represent single line connection, but also represent multiple line connection.

The touch flat panel display works in the following manner.

During the display driving period, the analog switch group 626 in the driving circuit 620 enables the power ends 62410, 62420, ..., and 624N0 of the operational amplifiers 6241, 6242, ..., and 624N as the last-stage driving cells to communicate with the display driving source 622, the control circuit 621 controls the display gating and output circuit 624 to transport the display driving signal to the connected electrodes 611 and 612 and the common electrodes 613 of the TFT array of the display screen, and the display screen 610 is in a display driving state.

During the touch detection period, the control circuit 621 controls the analog switch group 626 to enable the power ends 62410, 62420, ..., and 624N0 of the operational amplifiers 6241, 6242, ..., and 624N as the last-stage driving cells to communicate with the touch excitation source 623, and the display gating and output circuit 624 transports the touch signal to the electrode lines of the column electrodes 611 and row electrodes 612 and the common electrodes 613 of the display screen simultaneously. The touch system circuit 625 judges whether the display screen 610 is touched and positions of which column and row electrode lines are touched by detecting changes of touch signals on the sampling points 6251, 6252, ..., and 625N disposed at the output ends of the operational amplifiers 6241, 6242, ..., and 624N respectively through simultaneous sampling or scan sampling, and the display screen 610 is in a touch detection state. The position of the touched point is determined according to the detected intersection point of the touched row electrode line and touched column electrode line.

The touch flat panel display 600 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Seventh Embodiment

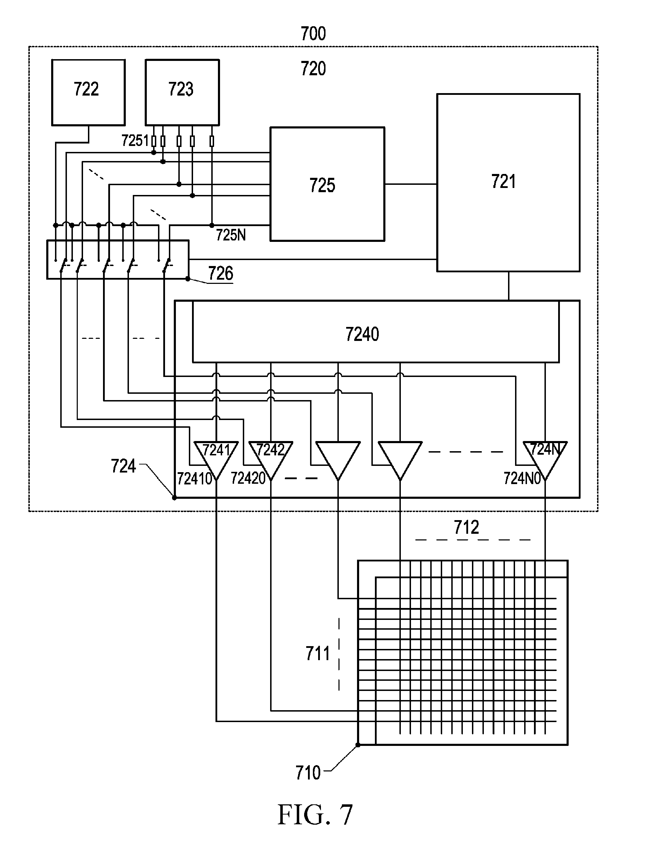

A touch flat panel display 700 as shown in FIG. 7 includes a passive display screen 710 and a driving circuit 720. The driving circuit 720 includes a control circuit 721, a display driving source 722 providing display driving energy, a touch excitation source 723 providing touch excitation energy, a display gating and output circuit 724, a touch system circuit 725, and an analog switch group 726. The display screen 710 has column electrodes 711 and row electrodes 712. For operational amplifiers 7241, 7242, ..., and 724N as last-stage driving cells of the display gating and output circuit 724, that is, last-stage driving cells of the driving circuit 720, input ends thereof are connected with a preceding stage circuit 7240, and output ends thereof are connected with electrode lines of the column electrodes 711 and row electrodes 712 of the display screen, power ends thereof 72410, 72420, ..., and 724N0 are connected with output ends of the analog switch group 726, one input end of each switch of the analog switch group 726 is connected with the display driving source 722, and the other input end of each switch of the analog switch group 726 is connected with the touch excitation source 723 through touch sampling elements 7251, ..., and 725N of the touch system circuit 725 respectively. Detection points are disposed at an end of the touch sampling elements 7251, ..., and 725N connected with the analog switch group 726, and are connected with the touch system circuit 725. The touch system circuit 725 detects changes of potentials on the detection points, and a reference endpoint for potential measurement is disposed at the other endpoint of the touch sampling element 725 (that is, an output end of the touch excitation source 723), a common ground end of the driving circuit 720, or a specific reference point of the driving circuit 720. The control circuit 721 controls the analog switch group 726 to enable the power ends 72410, 72420, ..., and 724N0 of the operational amplifiers 7241, 7242, ..., and 724N as the last-stage driving cells, to communicate with the display driving source 722, so as to transport a display driving signal to the connected electrode lines of the column electrodes 711 and row electrodes 712 of the display screen; or communicate with the touch excitation source 723, so as to transport a touch signal to the connected electrode lines of the column electrodes 711 and row electrodes 712 of the display screen. Connection lines in FIG. 7 not only represent single line connection, but also represent multiple line connection.

The touch flat panel display works in the following manner.

During the display driving period, the analog switch group 726 in the driving circuit 720 enables the power ends 72410, 72420, ..., and 724N0 of the operational amplifiers 7241, 7242, ..., and 724N as the last-stage driving cells to communicate with the display driving source 722, the control circuit 721 controls the display gating and output circuit 724 to transport the display driving signal to the connected column electrodes 711 and row electrodes 712 of the display screen, and the display screen 710 is in a display driving state.

During the touch detection period, the control circuit 721 controls the analog switch group 726 to enable the power ends 72410, 72420, ..., and 724N0 of the operational amplifiers 7241, 7242, ..., and 724N as the last-stage driving cells to communicate with the touch excitation source 723 through the touch sampling elements 7251, 7252, ..., and 725N respectively; the display gating and output circuit 724 transports the touch signal to the electrode lines of the column electrodes 711 and row electrodes 712 of the display screen simultaneously. The touch system circuit 725 judges whether the display screen 710 is touched and positions of which column and row electrode lines are touched by detecting changes of touch signals on the touch sampling elements 7251, 7252, ..., and 725N respectively through simultaneous sampling or scan sampling, and the display screen 710 is in a touch detection state. The position of the touched point is determined according to the detected intersection point of the touched row electrode line and touched column electrode line.

The touch flat panel display 700 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Eighth Embodiment

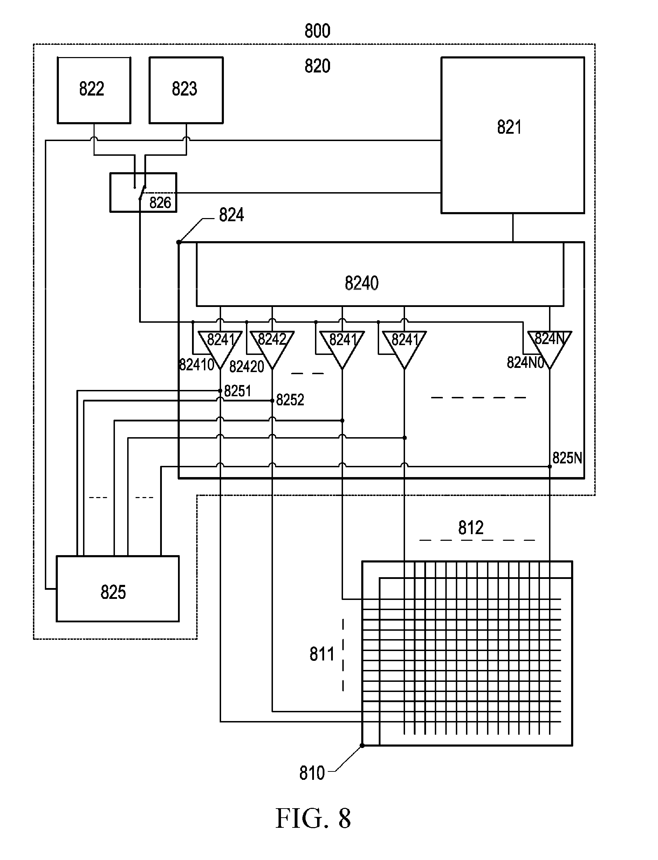

A touch flat panel display 800 as shown in FIG. 8 includes a passive display screen 810 and a driving circuit 820. The driving circuit 820 includes a control circuit 821, a display driving source 822 providing display driving energy, a touch excitation source 823 providing touch excitation energy, a display gating and output circuit 824, a touch system circuit 825, and a display/touch signal gating-switch and output circuit formed by an analog switch 826. The display screen 810 has column electrodes 811 and row electrodes 812. For operational amplifiers 8241, 8242, ..., and 824N as last-stage driving cells of the display gating and output circuit 824, that is, last-stage driving cells of the driving circuit 820, input ends thereof are connected with a preceding stage circuit 8240, and output ends thereof are connected with electrode lines of the column electrodes 811 and row electrodes 812 of the display screen; power ends thereof 82410, 82420, ..., and 824N0 are connected with output ends of the analog switch 826, one input end of the analog switch 826 is connected with the display driving source 822, and the other input end of the analog switch 826 is connected with the touch excitation source 823. Detection points 8251, 8252, ..., and 825N of the touch system circuit 825 are disposed at respective output ends of the operational amplifiers 8241, 8242, ..., and 824N of the last-stage driving cells of the display gating and output circuit 824. The touch system circuit 825 detects changes of potentials on the detection points, and a reference endpoint for potential measurement is disposed at an output end of the touch excitation source 823, a common ground end of the driving circuit 820, or a specific reference point of the driving circuit 820. The control circuit 821 controls the analog switch 826 to enable the power ends 82410, 82420, ..., and 824N0 of the operational amplifiers 8241, 8242, ..., and 824N as the last-stage driving cells, to communicate with the display driving source 822, so as to transport a display driving signal to the connected electrode lines of the column electrodes 811 and row electrodes 812 of the display screen; or communicate with the touch excitation source 823, so as to transport a touch signal to the connected electrode lines of the column electrodes 811 and row electrodes 812 of the display screen. Connection lines in FIG. 8 not only represent single line connection, but also represent multiple line connection.

The touch flat panel display works in the following manner.

During the display driving period, the analog switch 826 in the driving circuit 820 enables the power ends 82410, 82420, ..., and 824N0 of the operational amplifiers 8241, 8242, ..., and 824N as the last-stage driving cells to communicate with the display driving source 822, the control circuit 821 controls the display gating and output circuit 824 to transport the display driving signal to the connected column electrodes 811 and row electrodes 812 of the display screen, and the display screen 810 is in a display driving state.

During the touch detection period, the control circuit 821 controls the analog switch 826 to enable the power ends 82410, 82420, ..., and 824N0 of the operational amplifiers 8241, 8242, ..., and 824N as the last-stage driving cells to communicate with the touch excitation source 823 respectively; the display gating and output circuit 824 transports the touch signal to the electrode lines of the column electrodes 811 and row electrodes 812 of the display screen simultaneously. The touch system circuit 825 judges whether the display screen 810 is touched and positions of which column and row electrode lines are touched by detecting changes of touch signals on the sampling points 8251, 8252, ..., and 825N disposed at the output ends of the operational amplifiers 8241, 8242, ..., and 824N respectively through simultaneous sampling or scan sampling, and the display screen 810 is in a touch detection state. The position of the touched point is determined according to the detected intersection point of the touched row electrode line and touched column electrode line.

The touch flat panel display 800 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Ninth Embodiment

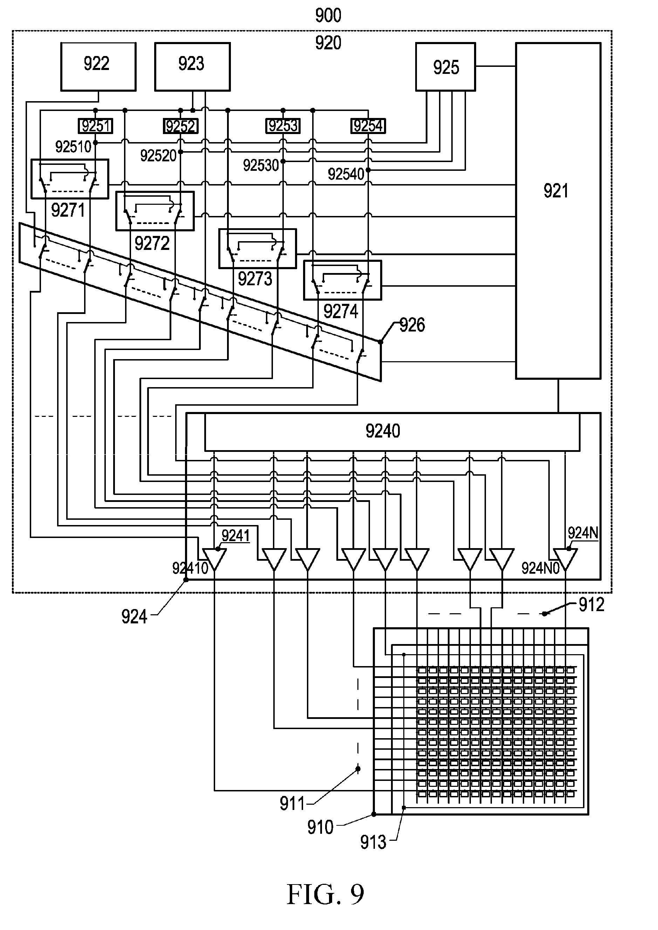

A touch flat panel display 900 as shown in FIG. 9 includes a TFT active display screen 910 and a driving circuit 920. The driving circuit 920 includes a control circuit 921, a display driving source 922 providing display driving energy, a touch excitation source 923 providing touch excitation energy, a display gating and output circuit 924, a touch system circuit 925, an analog switch group 926, and analog switch groups 9271, 9272, 9273, and 9274. The display screen 910 has column electrodes 911, row electrodes 912, and common electrodes 913 of a TFT array. For operational amplifiers 9241, ..., and 924N as last-stage driving cells of the display gating and output circuit 924, that is, last-stage driving cells of the driving circuit 920, input ends thereof are connected with a preceding stage circuit 9240, output ends thereof are connected with electrode lines of the column electrodes 911 and row electrodes 912 and the common electrodes 913 of the TFT array of the display screen, power ends thereof 92410, ..., and 924N0 are connected with output ends of the analog switch group 926, one input end of each switch of the analog switch group 926 is connected with the display driving source 922, and the other input end of each switch of the analog switch group 926 is divided into four groups and is connected with each output end of each switch of the analog switch groups 9271, 9272, 9273, and 9274 respectively; one input end of each switch of the analog switch groups 9271, 9272, 9273, and 9274 is connected with the touch excitation source 925 through touch sampling elements 9251, 9252, 9253, and 9254 of the touch system circuit 925 respectively, and the other input end of each switch of the analog switch groups 9271, 9272, 9273, and 9274 is directly connected with the touch excitation source 923. Detection points 92510, 92520, 92530, and 92540 are disposed at an end of the touch sampling elements 9251, 9252, 9253, and 9254 connected with the analog switch groups 9271, 9272, 9273, and 9274, and are connected with the touch system circuit 925. The touch system circuit 925 detects changes of potentials on the detection points 92510, 92520, 92530, and 92540, and a reference endpoint for potential measurement is disposed at the other endpoint of the touch sampling elements 9251, 9252, 9253, and 9254 (that is, an output end of the touch excitation source 923), a common ground end of the driving circuit 920, or a specific reference point of the driving circuit 920. The control circuit 921 controls the analog switch group 926 and the analog switch groups 9271, 9272, 9273, and 9274 to enable the power ends 92410, ..., and 924N0 of the operational amplifiers 9241, ..., and 924N as the last-stage driving cells, to communicate with the display driving source 922, so as to transport a display driving signal to the connected electrode lines of the column electrodes 911 and row electrodes 912 and the common electrodes 913 of the display screen; or communicate with the touch excitation source 923, so as to transport a touch signal to the connected electrode lines of the column electrodes 911 and row electrodes 912 and the common electrodes 913 of the display screen. Connection lines in FIG. 9 not only represent single line connection, but also represent multiple line connection.

The touch flat panel display works in the following manner.

During the display driving period, the analog switch group 926 in the driving circuit 920 enables the power ends 92410, 92420, ..., and 924N0 of the operational amplifiers 9241, 9242, ..., and 924N as the last-stage driving cells to communicate with the display driving source 922, the control circuit 921 controls the display gating and output circuit 924 to transport the display driving signal to the connected electrode lines of the column electrodes 911 and row electrodes 912 and the common electrodes 913 of the display screen, and the display screen 910 is in a display driving state.

During the touch detection period, the control circuit 921 controls the analog switch group 926 to enable the power ends 92410, ..., and 924N0 of the operational amplifiers 9241, ..., and 924N as the last-stage driving cells to be divided into four groups to be connected with the analog switch groups 9271, 9272, 9273, and 9274 respectively, and the analog switch groups 9271, 9272, 9273, and 9274 only enable a part of (one or more) power ends in each group each time to communicate with the touch excitation source 923 through the touch sampling elements 9251, 9252, 9253, and 9254 respectively; power ends of the other last-stage driving cells directly communicate with the touch excitation source 923; the display gating and output circuit 924 transports the touch signal to the electrode lines of the column electrodes 911 and row electrodes 912 and the common electrodes 913 of the display screen simultaneously. The touch system circuit 925 judges whether the display screen 910 is touched, which areas are touched and positions of which column and row electrode lines are touched by successively detecting changes of touch signals on the sampling points 92510, 92520, 92530, and 92540 respectively, and implementing touch detection to multiple areas of the display screen 910 simultaneously, and the display screen 910 is in a touch detection state. The position of the touched point is determined according to the detected intersection point of the touched row electrode line and touched column electrode line.

The touch flat panel display 900 repeatedly switches between the display driving period and the touch detection period, and the display driving and the touch detection time division multiplex the electrodes of the display screen, thus forming a touch flat panel display which supports both display and touch control.

Touch detection is implemented simultaneously to multiple areas of the display screen, so as to save time needed for implementing touch detection to the full screen of the display screen.

### Tenth Embodiment

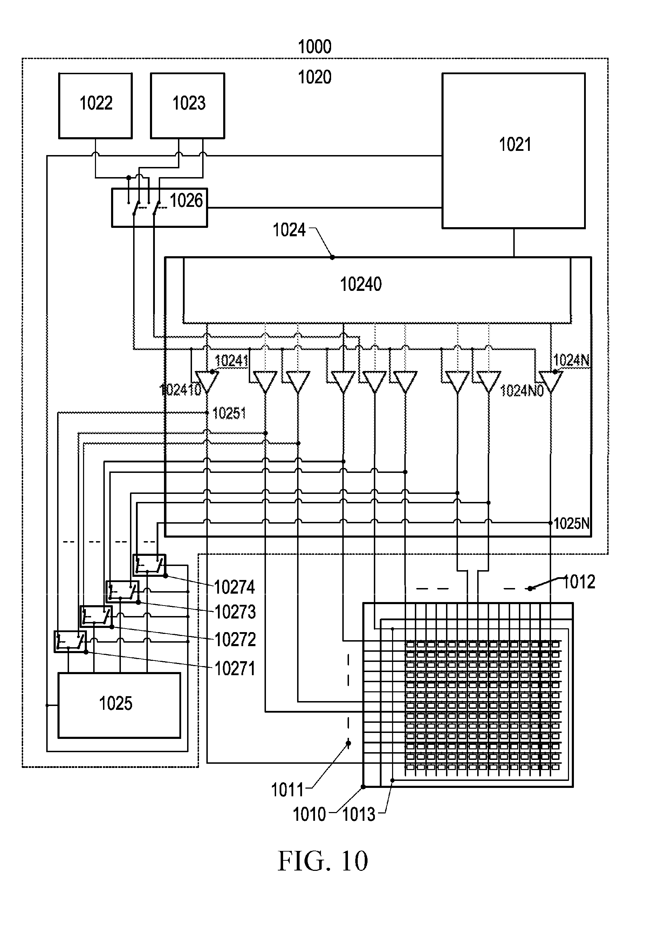

A touch flat panel display 1000 as shown in FIG. 10 includes a TFT active display screen 1010 and a driving circuit 1020. The driving circuit 1020 includes a control circuit 1021, a display driving source 1022 providing display driving energy, a touch excitation source 1023 providing touch excitation energy, a display gating and output circuit 1024, a touch system circuit 1025, a display/touch signal gating-switch and output circuit formed by an analog switch group 1026, and a multiplexer formed by analog switch groups 10271, 10272, 10273, and 10274. The display screen 1010 has column electrodes 1011, row electrodes 1012, and common electrodes 1013 of a TFT array. For operational amplifiers 10241, ..., and 1024N as last-stage driving cells of the display gating and output circuit 1024, that is, last-stage driving cells of the driving circuit 1020, input ends thereof are connected with a preceding stage circuit 10240, output ends thereof are connected with electrode lines of the column electrodes 1011 and row electrodes 1012 and the common electrodes 1013 of the TFT array of the display screen; power ends thereof 102410, ..., and 1024N0 are connected with an output end of each switch of the analog switch group 1026, one input end of each switch of the analog switch group 1026 is connected with the display driving source 1022, and the other input end of each switch of the analog switch group 1026 is connected with the touch excitation source 1023. Detection points 10251, ..., and 1025N of the touch system circuit 1025 are disposed at respective output ends of the operational amplifiers 10241, ..., and 1024N of the last-stage driving cells of the display gating and output circuit 1024, and the detection points 10251, ..., and 1025N are divided into four groups to be connected with the touch system circuit 1025 through the analog switch groups 10271, 10272, 10273, and 10274 respectively. The touch system circuit 1025 detects changes of potentials on the detection points, and a reference endpoint for potential measurement is disposed at an output end of the touch excitation source 1023, a common ground end of the driving circuit 1020, or a specific reference point of the driving circuit 1020. The control circuit 1021 controls the analog switch 1026 to enable the power ends 102410, ..., and 1024N0 of the operational amplifiers 10241, ..., and 1024N as the last-stage driving cells, to communicate with the display driving source 1022, so as to transport a display driving signal to the connected electrode lines of the column electrodes 1011 and row electrodes 1012 and the common electrodes 1013 of the display screen; or communicate with the touch excitation source 1023, so as to transport a touch signal to the connected electrode lines of the column electrodes 1011 and row electrodes 1012 and the common electrodes 1013 of the display screen. Connection lines in FIG. 10 not only represent single line connection, but also represent multiple line connection.

The touch flat panel display works in the following manner.

During the display driving period, the analog switch 1026 in the driving circuit 1020 enables the power ends 102410, ..., and 1024N0 of the operational amplifiers 10241, ..., and 1024N as the last-stage driving cells to communicate with the display driving source 1022, the control circuit 1021 controls the display gating and output circuit 1024 to transport the display driving signal to the connected electrode lines of the column electrodes 1011 and row electrodes 1012 and the common electrodes 1013 of the display screen, and the display screen 1010 is in a display driving state.

During the touch detection period, the control circuit 1021 controls the analog switch 1026 to enable the power ends 102410, ..., and 1024N0 of the operational amplifiers 10241, ..., and 1024N as the last-stage driving cells to communicate with the touch excitation source 1023, and the display gating and output circuit 1024 transports the touch signal to the electrode lines of the column electrodes 1011 and row electrodes 1012 and the common electrodes 1013 of the display screen simultaneously. The analog switch groups 10271, 10272, 10273 and 10274 only enable a part of (one or more) detection points in each group of detection points each time to communicate with the touch system circuit 1025, and the touch system circuit 1025 judges whether the display screen 1010 is touched, which areas are touched and positions of which column and row electrode lines are touched by successively detecting changes of touch signals on the four groups of detection points respectively, and implementing touch detection to multiple areas of the display screen 1010 simultaneously, and the display screen 1010 is in a touch detection state. The position of the touched point is determined according to the detected intersection point of the touched row electrode line and touched column electrode line.

The touch flat panel display 1000 repeatedly switches between the display driving period and the touch detection period, and the display driving and the touch detection time division multiplex the electrodes of the display screen, thus forming a touch flat panel display which supports both display and touch control.

Touch detection is implemented simultaneously to multiple areas of the display screen, so as to save time needed for implementing touch detection to the full screen of the display screen.

### Eleventh Embodiment

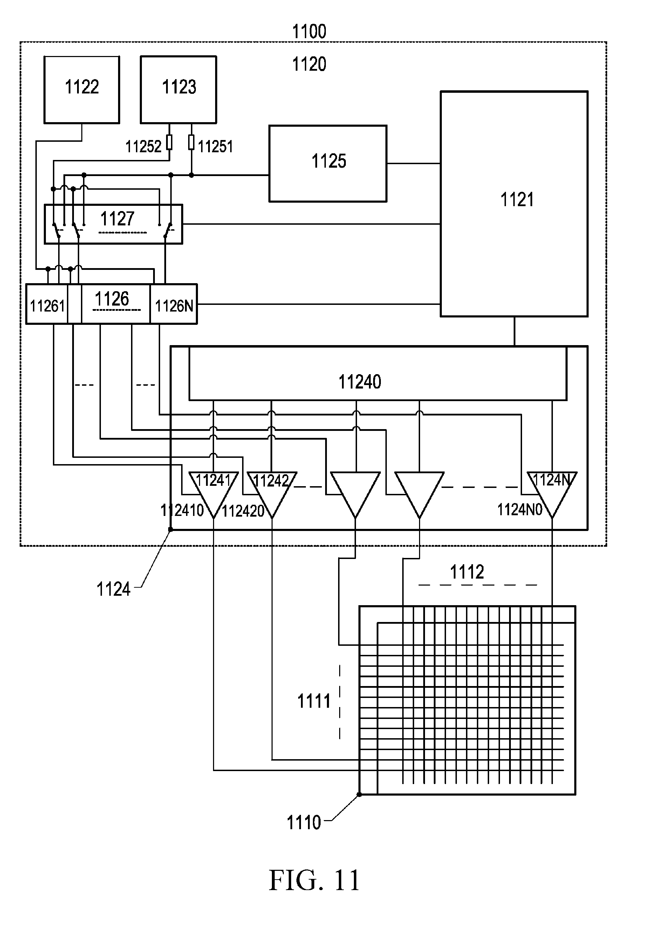

A touch flat panel display 1100 as shown in FIG. 11 includes a passive display screen 1110 and a driving circuit 1120. The driving circuit 1120 includes a control circuit 1121, a display driving source 1122 providing display driving energy, a touch excitation source 1123 providing touch excitation energy, a display gating and output circuit 1124, a touch system circuit 1125, a display/touch signal loading and merge circuit group 1126, and a multiplexer formed by an analog switch group 1127. The display screen 1110 has column electrodes 1111 and row electrodes 1112. The display driving source 1122 uses a DC power supply, and the touch excitation source 1123 uses an AC power supply with a high frequency (for example, over 50 kHz). For operational amplifiers 11241, 11242, ..., and 1124N as last-stage driving cells of the display gating and output circuit 1124, that is, last-stage driving cells of the driving circuit 1120, input ends thereof are connected with a preceding stage circuit 11240, and output ends thereof are connected with electrode lines of the column electrodes 1111 and row electrodes 1112 of the display screen; power ends thereof 112410, 112420, ..., and 1124N0 are connected with output ends of display/touch signal loading and merge circuit units 11261, ..., and 1126N of the display/touch signal loading and merge circuit group 1126, one input end of each display/touch signal loading and merge circuit unit is connected with the display driving source 1122, and the other input end is connected with an output end of each analog switch of the analog switch group 1127 respectively; one input end of each switch of the analog switch group 1127 is connected with the touch excitation source 1123 through a touch signal sampling resistor 11251 of the touch system circuit 1125, and the other input end is connected with the touch excitation source 1123 through a balancing resistor 11252. Detection points are disposed at an end of the touch signal sampling element 11251 connected with the analog switch group 1127, and are connected with the touch system circuit 1125. The touch system circuit 1125 detects changes of potentials on the detection points, and a reference endpoint for potential measurement is disposed at the other endpoint of the touch signal sampling element 11251 (that is, an output end of the touch excitation source 1123), a common ground end of the driving circuit 1120, or a specific reference point of the driving circuit 1120. The display/touch signal loading and merge circuit group 1126 and the analog switch group 1127 enable a mixed signal of the display driving source 1122 and the AC touch excitation source 1123 to be applied on the power ends 112410, 112420, ..., and 1124N0 of the operational amplifiers 11241, 11242, ..., and 1124N of the last-stage driving cells, and the operational amplifiers 11241, 11242, ..., and 1124N transport a display driving and touch mixed signal to the connected electrode lines of the column electrodes 1111 and row electrodes 1112 of the display screen. Connection lines in FIG. 11 not only represent single line connection, but also represent multiple line connection.

The touch flat panel display can work in a manner of implementing display driving and touch detection simultaneously.

The control circuit 1121 only selects one of analog switches of the analog switch group 1127 each time to communicate with the high-frequency touch excitation source 1123 through the touch signal sampling resistor 11251, and the other switches also communicate with the high-frequency touch excitation source 1123 through the balancing resistor 11252. Each display/touch signal loading and merge circuit unit of the display/touch signal loading and merge circuit group 1126 enables the display driving source 1122 and the touch excitation source 1123 to be simultaneously applied on the power end of each operational amplifier at the last stage of the driving circuit, and each operational amplifier transports a mixed signal of a low frequency display driving signal and a high frequency touch signal to the electrode lines of the column electrodes 1111 and row electrodes 1112 of the display screen simultaneously. The control circuit 1121 controls each switch of the analog switch group 1127 to communicate with the touch excitation source 1123 through the touch signal sampling resistor 11251 successively, and the electrode lines of the column electrodes 1111 and row electrodes 1112 of the display screen transmit a touch signal simultaneously, while the touch system circuit 1125 detects the change of the high frequency touch signal only on one electrode line in the column electrodes 1111 and row electrodes 1112 of the display screen each time. The touch system circuit 1125 judges whether the display screen 1110 is touched and positions of which electrode lines are touched by detecting the change of the high frequency touch signal on the touch signal sampling element 11251 successively. The position of the touched point is determined according to the detected intersection point of the touched row electrode line and touched column electrode line. The display driving and the touch detection frequency division multiplex the electrodes of the display screen, thus forming a touch flat panel display which supports both display and touch control.

The touch flat panel display can also work in a manner of implementing display driving and touch detection in different time.

During the display driving period, each switch of the analog switch group 1127 in the driving circuit 1120 is disconnected from the touch excitation source 1123, each display/touch signal loading and merge circuit unit of the display/touch signal loading and merge circuit group 1126 only applies the display driving source 1122 on the power end of each operational amplifier at the last stage of the driving circuit without combining any touch signal on the display driving signal, each operational amplifier at the last stage of the driving circuit only transports the low frequency display driving signal to the electrode lines of the column electrodes 1111 and row electrodes 1112 of the display screen, and the display screen 1110 is in a display driving state.

During the touch detection period, the control circuit 1121 only selects one of analog switches of the analog switch group 1127 each time to communicate with the high-frequency touch excitation source 1123 through the touch signal sampling resistor 11251, and the other switches also communicate with the high-frequency touch excitation source 1123 through the balancing resistor 11252. Each display/touch signal loading and merge circuit unit of the display/touch signal loading and merge circuit group 1126 enables the display driving source 1122 and the touch excitation source 1123 to be simultaneously applied on the power end of each operational amplifier at the last stage of the driving circuit. The control circuit 1121 then enables the display driving state of each operational amplifier at the last stage to be outputting a black or white display driving signal, and each operational amplifier transports the low frequency black or white display driving signal and the high frequency touch signal to the electrode lines of the column electrodes 1111 and row electrodes 1112 of the display screen simultaneously. The control circuit 1121 controls each switch of the analog switch group 1127 to communicate with the touch excitation source 1123 through the touch signal sampling resistor 11251 successively, and the electrode lines of the column electrodes 1111 and row electrodes 1112 of the display screen transmit the touch signal simultaneously, while the touch system circuit 1125 detects the change of the high frequency touch signal only on the electrode line communicating with the touch signal sampling resistor 11251 in the column electrodes 1111 and row electrodes 1112 of the display screen each time. The touch system circuit 1125 judges whether the display screen 1110 is touched and positions of which electrode lines are touched by detecting the change of the high frequency touch signal on the touch signal sampling element 11251 successively, and the display screen 1110 is in a touch detection state. The position of the touched point is determined according to the detected intersection point of the touched row electrode line and touched column electrode line.

The touch flat panel display 1100 repeatedly switches between the display driving period and the touch detection period, and the display driving and the touch detection time division multiplex the electrodes of the display screen, thus forming a touch flat panel display which supports both display and touch control.

### Twelfth Embodiment

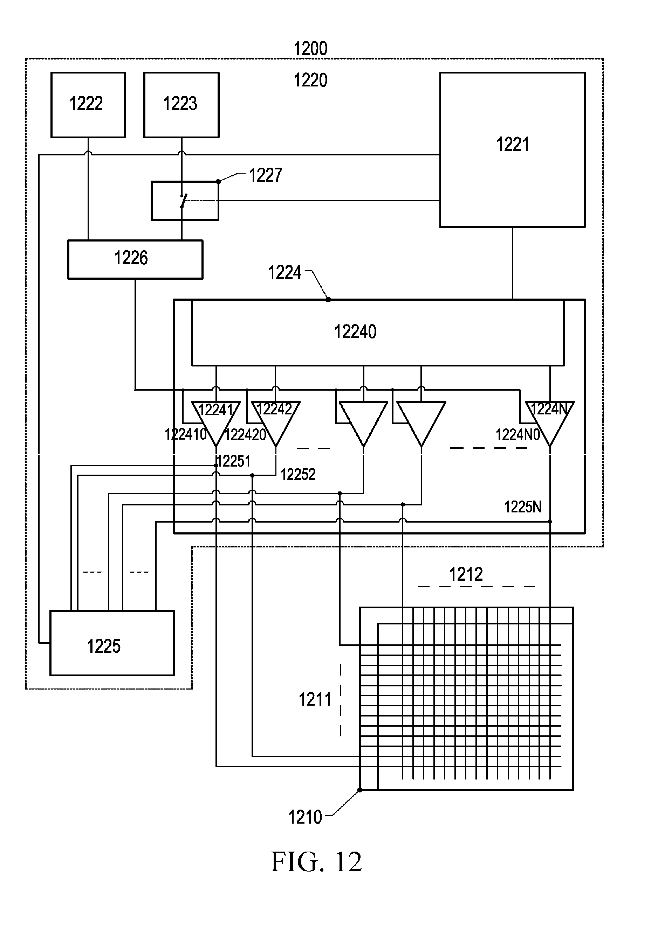

A touch flat panel display 1200 as shown in FIG. 12 includes a passive display screen 1210 and a driving circuit 1220. The driving circuit 1220 includes a control circuit 1221, a display driving source 1222 providing display driving energy, a touch excitation source 1223 providing touch excitation energy, a display gating and output circuit 1224, a touch system circuit 1225, a display/touch signal loading and merge circuit 1226, and an analog switch 1227. The display screen 1210 has column electrodes 1211 and row electrodes 1212. The display driving source 1222 uses a DC power supply, and the touch excitation source 1223 uses an AC power supply with a high frequency (for example, over 50 kHz). For operational amplifiers 12241, 12242, ..., and 1224N as last-stage driving cells of the display gating and output circuit 1224, that is, last-stage driving cells of the driving circuit 1220, input ends thereof are connected with a preceding stage circuit 12240, and output ends thereof are connected with electrode lines of the column electrodes 1211 and row electrodes 1212 of the display screen; power ends thereof 122410, 122420, ..., and 1224N0 are connected with an output end of the display/touch signal loading and merge circuit 1226, one input end of each display/touch signal loading and merge circuit unit is connected with the display driving source 1222, and the other input end is connected with the touch excitation source 1223 through the analog switch 1227. Sampling points 12251, 12252, ..., and 1225N of the touch system circuit 1225 are disposed at respective output ends of the operational amplifiers 12241, 12242, ..., and 1224N of the last-stage driving cells of the display gating and output circuit 1224, and are connected with the touch system circuit 1225. The touch system circuit 1225 detects changes of potentials on the sampling points, and a reference endpoint for potential measurement is disposed at an output end of the touch excitation source 1223, a common ground end of the driving circuit 1220, or a specific reference point of the driving circuit 1220. The display/touch signal loading and merge circuit group 1226 enables a mixed signal of the display driving source 1222 and the AC touch excitation source 1123 to be applied on the power ends 122410, 122420, ..., and 1224N0 of the operational amplifiers 12241, 12242, ..., and 1224N of the last-stage driving cells, and the operational amplifiers 12241, 12242, ..., and 1224N transport a display driving and touch mixed signal to the connected electrode lines of the column electrodes 1211 and row electrodes 1212 of the display screen. Connection lines in FIG. 12 not only represent single line connection, but also represent multiple line connection.

The touch flat panel display can work in a manner of implementing display driving and touch detection simultaneously.

The control circuit 1221 controls the analog switch 1227 to be in a closed state, the display/touch signal loading and merge circuit 1226 communicates with the touch excitation source 1223, the display/touch signal loading and merge circuit 1226 enables the display driving source 1222 and the touch excitation source 1223 to be simultaneously applied on the power end of each operational amplifier at the last stage of the driving circuit, and each operational amplifier transports a mixed signal of a low frequency display driving signal and a high frequency touch signal to the electrode lines of the column electrodes 1211 and row electrodes 1212 of the display screen simultaneously. The touch system circuit 1225 judges whether the display screen 1210 is touched and positions of which electrode lines are touched by detecting changes of touch signals on the sampling points 12251, 12252, ..., and 1225N disposed at the output ends of the operational amplifiers 12241, 12242, ..., and 1224N respectively through simultaneous sampling or scan sampling. The position of the touched point is determined according to the detected intersection point of the touched row electrode line and touched column electrode line. The display driving and the touch detection frequency division multiplex the electrodes of the display screen, thus forming a touch flat panel display which supports both display and touch control.

The touch flat panel display can also work in a manner of implementing display driving and touch detection in different time.

During the display driving period, the analog switch 1227 in the driving circuit 1220 is disconnected from the touch excitation source 1223, the display/touch signal loading and merge circuit 1226 only applies the display driving source 1222 on the power end of each operational amplifier at the last stage of the driving circuit without combining any touch signal on the display driving signal, each operational amplifier at the last stage of the driving circuit only transports the low frequency display driving signal to the electrode lines of the column electrodes 1211 and row electrodes 1212 of the display screen, and the display screen 1210 is in a display driving state.

During the touch detection period, the analog switch 1227 is in the closed state, and the display/touch signal loading and merge circuit 1226 enables the display driving source 1222 and the touch excitation source 1223 to be simultaneously applied on the power end of each operational amplifier at the last stage of the driving circuit. The control circuit 1221 then enables the display driving state of each operational amplifier at the last stage to be outputting a black or white display driving signal, and each operational amplifier transports a mixed signal of a low frequency black or white display driving signal and a high frequency touch signal to the electrode lines of the column electrodes 1211 and row electrodes 1212 of the display screen simultaneously. The touch system circuit 1225 judges whether the display screen 1210 is touched and positions of which electrode lines are touched by detecting the change of the high frequency touch signal in the mixed signal on the sampling points 12251, 12252, ..., and 1225N disposed at the output ends of the operational amplifiers 12241, 12242, ..., and 1224N respectively through simultaneous sampling or scan sampling, and the display screen 1210 is in a touch detection state. The position of the touched point is determined according to the detected intersection point of the touched row electrode line and touched column electrode line.

The touch flat panel display 1200 repeatedly switches between the display driving period and the touch detection period, and the display driving and the touch detection time division multiplex the electrodes of the display screen, thus forming a touch flat panel display which supports both display and touch control.

### Thirteenth Embodiment

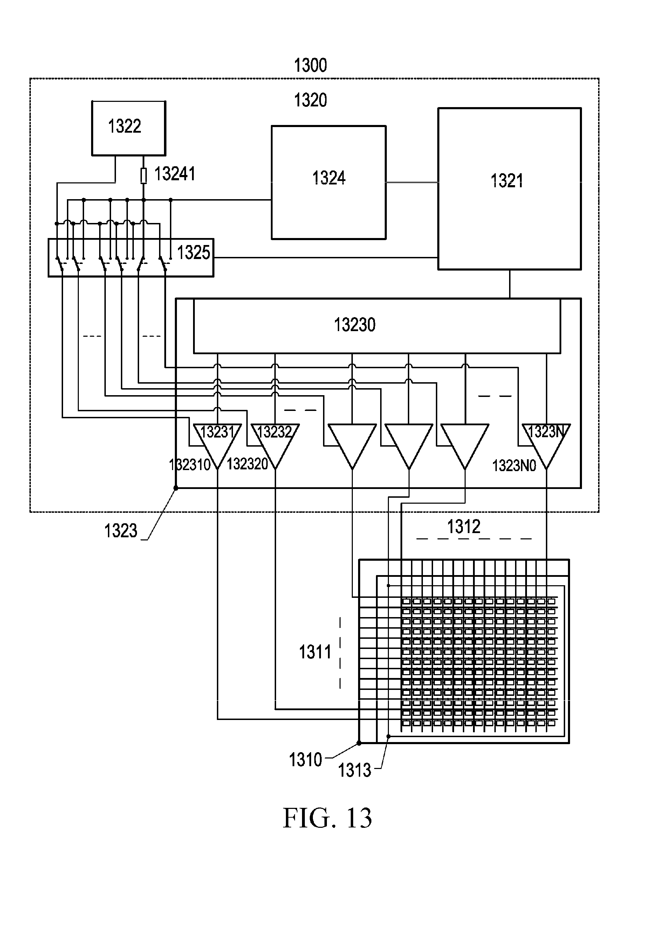

A touch flat panel display 1300 as shown in FIG. 13 includes a TFT active display screen 1310 and a driving circuit 1320. The driving circuit 1320 includes a control circuit 1321, a shared driving source 1322 providing display driving energy and providing touch excitation energy, a display gating and output circuit 1323, a touch system circuit 1324, and an analog switch group 1325. For operational amplifiers 13231, 13232, ..., and 1323N as last-stage driving cells of the display gating and output circuit 1323, that is, last-stage driving cells of the driving circuit 1320, input ends thereof are connected with a preceding stage circuit 13230, output ends thereof are connected with electrode lines of the column electrodes 1311 and row electrodes 1312 and the common electrodes 1313 of a TFT array of the display screen; power ends thereof 132310, 132320, ..., and 1323N0 are connected with output ends of the analog switch group 1325, one input end of each switch of the analog switch group 1325 is connected with the shared driving source 1324 through a touch sampling element 13241 of the touch system circuit 1322, and the other input end is directly connected with the shared driving source 1322. Detection points are disposed at an end of the touch sampling element 13241 connected with the analog switch group 1325, and are connected with the touch system circuit 1324. The touch system circuit 1324 detects changes of potentials on the detection points, and a reference endpoint for potential measurement is disposed at the other endpoint of the touch sampling element 13241 (that is, an output end of the shared driving source 1322), a common ground end of the driving circuit 1320, or a specific reference point of the driving circuit 1320. The shared driving source 1322 for display driving and touch excitation uses a DC power supply. When the control circuit 1321 controls a preceding stage circuit of the last stage operational amplifiers 13231, 13232, ..., and 1323N to input a DC or low frequency signal to the input ends of the last stage operational amplifiers 13231, 13232, ..., and 1323N, the output ends of the last stage operational amplifiers also follow the input ends thereof and output a DC or low frequency display driving signal to the connected electrode lines of the column electrodes 1311 and row electrodes 1312 and the common electrodes 1313 of the display screen; when the control circuit 1321 controls the preceding stage circuit of the last stage operational amplifiers to input a high frequency (for example, over 50 kHz) signal to the input ends of the last stage operational amplifiers, the output ends of the last stage operational amplifiers also follow the input ends thereof and output a high frequency touch signal to the connected electrode lines of the column electrodes 1311 and row electrodes 1312 and the common electrodes 1313 of the display screen. The display driving energy and the touch excitation energy provided by the driving circuit 1320 to the display screen 1310 are from the shared driving source 1322. Connection lines in FIG. 13 not only represent single line connection, but also represent multiple line connection.

The touch flat panel display works in the following manner.

During the display driving period, the control circuit 1321 controls the analog switch group 1325 connected with the power ends 132310, 132320, ..., and 1323N0 of the last stage operational amplifiers 13231, 13232, ..., and 1323N, to enable the power ends of the operational amplifiers to directly communicate with the shared driving source 1322, and when the control circuit 1321 controls the preceding stage circuit to input the DC or low frequency signal to the input ends of the last stage operational amplifiers 13231, 13232, ..., and 1323N, the output ends of the last stage operational amplifiers also follow the input ends thereof and output the DC or low frequency display driving signal to the connected electrode lines of the column electrodes 1311 and row electrodes 1312 and the common electrodes 1313 of the display screen. During this period, the driving circuit 1320 works completely as an ordinary display driver, the display gating and output circuit 1323 transports the display driving signal to the connected electrode lines of the column electrodes 1311 and row electrodes 1312 and the common electrodes 1313 of the display screen, and the display screen 1310 is in a display driving state.

During the touch detection period, the control circuit 1321 controls the preceding stage circuit to input the high frequency (for example, over 50 kHz) signal to the input ends of the last stage operational amplifiers 13231, 13232, ..., and 1323N, and the output ends of the last stage operational amplifiers also follow the input ends thereof and output the high frequency touch signal to the connected electrode lines of the column electrodes 1311 and row electrodes 1312 and the common electrodes 1313 of the display screen. Furthermore, the control circuit 1321 only selects one switch from analog switches 13251, 13252, ..., and 1325N of the analog switch group 1325 each time, to communicate with the shared driving source 1322 through the touch signal sampling resistor 13241 successively, and the other switches directly communicate with the shared driving source 1322. The electrode lines of the column electrodes 1311 and row electrodes 1312 and the common electrodes 1313 of the display screen transmit the display driving signal and the touch signal simultaneously, while the touch system circuit 1324 detects the change of the touch signal only on the electrode line communicating with the touch signal sampling resistor 13241 in the column electrodes 1311 and row electrodes 1312 of the display screen each time. During this period, the driving circuit 1320 outputs the high frequency touch signal to the connected electrode lines of the column electrodes 1311 and row electrodes 1312 and the common electrodes 1313 of the display screen, the touch system circuit 1324 judges whether the display screen 1310 is touched and positions of which column and row electrode lines are touched by detecting the change of the touch signal on the touch sampling element 13241 successively, and the display screen 1310 is in a touch detection state. The position of the touched point is determined according to the detected intersection point of the touched row electrode line and touched column electrode line.

The touch flat panel display 1300 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Fourteenth Embodiment

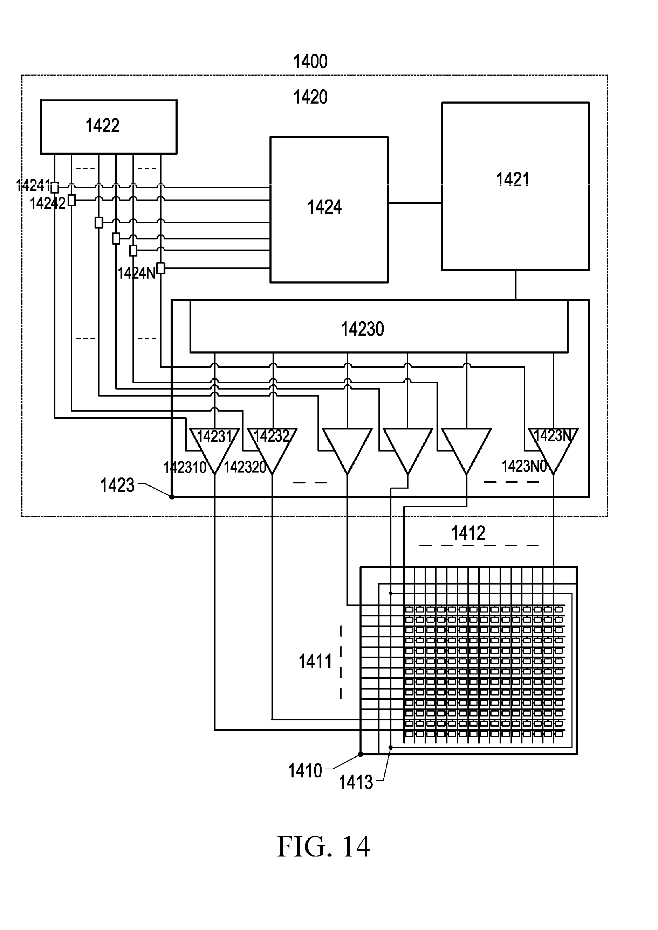

A touch flat panel display 1400 as shown in FIG. 14 includes a TFT active display screen 1410 and a driving circuit 1420. The driving circuit 1420 includes a control circuit 1421, a shared driving source 1422 providing display driving energy and touch excitation energy, a display gating and output circuit 1423, and a touch system circuit 1424. For operational amplifiers 14231, 14232, ..., and 1423N as last-stage driving cells of the display gating and output circuit 1423, that is, last-stage driving cells of the driving circuit 1420, input ends thereof are connected with a preceding stage circuit 14230, output ends thereof are connected with electrode lines of the column electrodes 1411 and row electrodes 1412 and the common electrodes 1413 of a TFT array of the display screen, and power ends thereof 142310, 142320, ..., and 1423N0 are connected with the shared driving source 1422 through touch signal sampling units 14241, 14242, ..., and 1424N. The touch signal sampling units 14241, 14242, ..., and 1424N are connected with the touch system circuit 1424, and the touch system circuit 1424 detects changes of touch signals on the sampling units. The shared driving source 1422 for display driving and touch excitation uses a DC power supply. When the control circuit 1421 controls a preceding stage circuit of the last stage operational amplifiers 14231, 14232, ..., and 1423N to input a DC or low frequency signal to the input ends of the last stage operational amplifiers 14231, 14232, ..., and 1423N, the output ends of the last stage operational amplifiers also follow the input ends thereof and output a DC or low frequency display driving signal to the connected electrode lines of the column electrodes 1411 and row electrodes 1412 and the common electrodes 1413 of the display screen; when the control circuit 1421 controls the preceding stage circuit of the last stage operational amplifiers to input a high frequency (for example, over 50 kHz) signal to the input ends of the last stage operational amplifiers, the output ends of the last stage operational amplifiers also follow the input ends thereof and output a high frequency touch signal to the connected electrode lines of the column electrodes 1411 and row electrodes 1412 and the common electrodes 1413 of the display screen. The display driving energy and the touch excitation energy provided by the driving circuit 1420 to the display screen 1410 are from the shared driving source 1422. Connection lines in FIG. 14 not only represent single line connection, but also represent multiple line connection.

The touch flat panel display works in the following manner.

During the display driving period, when the control circuit 1421 controls the preceding stage circuit to input the DC or low frequency signal to the input ends of the last stage operational amplifiers 14231, 14232, ..., and 1423N, the output ends of the last stage operational amplifiers also follow the input ends thereof and output the DC or low frequency display driving signal to the connected electrode lines of the column electrodes 1411 and row electrodes 1412 and the common electrodes 1413 of the display screen. During this period, the driving circuit 1420 works completely as an ordinary display driver, the display gating and output circuit 1423 transports the display driving signal to the connected electrode lines of the column electrodes 1411 and row electrodes 1412 and the common electrodes 1413 of the display screen, and the display screen 1410 is in a display driving state.

During the touch detection period, the control circuit 1421 controls the preceding stage circuit to input the high frequency (for example, over 50 kHz) signal to the input ends of the last stage operational amplifiers 14231, 14232, ..., and 1423N, and the output ends of the last stage operational amplifiers also follow the input ends thereof and output the high frequency touch signal to the connected electrode lines of the column electrodes 1411 and row electrodes 1412 and the common electrodes 1413 of the display screen simultaneously. The touch system circuit 1424 judges whether the display screen 1410 is touched and positions of which column and row electrode lines are touched by detecting changes of touch signals on the touch signal sampling units 14241, 14242, ..., and 1424N respectively through simultaneous sampling or scan sampling, and the display screen 1410 is in a touch detection state. The position of the touched point is determined according to the detected intersection point of the touched row electrode line and touched column electrode line.

The touch flat panel display 1400 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

The touch signal sampling unit is a single passive device such as a resistor, capacitor, or inductor, a combination of multiple passive devices, a single active device, or a circuit unit having active devices.

### Fifteenth Embodiment

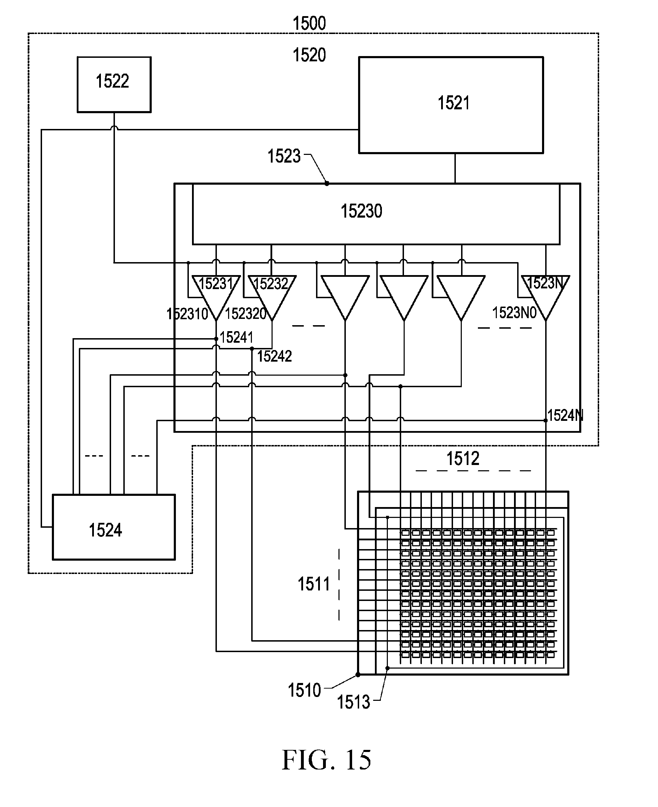

A touch flat panel display 1500 as shown in FIG. 15 includes a TFT active display screen 1510 and a driving circuit 1520. The driving circuit 1520 includes a control circuit 1521, a shared driving source 1522 providing display driving energy and touch excitation energy, a display gating and output circuit 1523, and a touch system circuit 1524. For operational amplifiers 15231, 15232, ..., and 1523N as last-stage driving cells of the display gating and output circuit 1523, that is, last-stage driving cells of the driving circuit 1520, input ends thereof are connected with a preceding stage circuit 15230, output ends thereof are connected with electrode lines of the column electrodes 1511 and row electrodes 1512 and the common electrodes 1513 of a TFT array of the display screen, and power ends thereof 152310, 152320, ..., and 1523N0 are connected with the shared driving source 1522. Detection points 15241, 15242, ..., and 1524N of the touch system circuit 1524 are disposed at respective output ends of the operational amplifiers 15231, 15232, ..., and 1523N of the last-stage driving cells of the display gating and output circuit 1523. The touch system circuit 1524 detects changes of potentials on the detection points, and a reference endpoint for potential measurement is disposed at an output end of the shared driving source 1522, a common ground end of the driving circuit 1520, or a specific reference point of the driving circuit 1520. The shared driving source 1522 for display driving and touch excitation uses a DC power supply. When the control circuit 1521 controls a preceding stage circuit of the last stage operational amplifiers 15231, 15232, ..., and 1523N to input a DC or low frequency signal to the input ends of the last stage operational amplifiers 15231, 15232, ..., and 1523N, the output ends of the last stage operational amplifiers also follow the input ends thereof and output a DC or low frequency display driving signal to the connected electrode lines of the column electrodes 1511 and row electrodes 1512 and the common electrodes 1513 of the display screen; when the control circuit 1521 controls the preceding stage circuit of the last stage operational amplifiers to input a high frequency (for example, over 50 kHz) signal to the input ends of the last stage operational amplifiers, the output ends of the last stage operational amplifiers also follow the input ends thereof and output a high frequency touch signal to the connected electrode lines of the column electrodes 1511 and row electrodes 1512 and the common electrodes 1513 of the display screen. The display driving energy and the touch excitation energy provided by the driving circuit 1520 to the display screen 1510 are from the shared driving source 1522. Connection lines in FIG. 15 not only represent single line connection, but also represent multiple line connection.

The touch flat panel display works in the following manner.

During the display driving period, when the control circuit 1521 controls the preceding stage circuit to input the DC or low frequency signal to the input ends of the last stage operational amplifiers 15231, 15232, ..., and 1523N, the output ends of the last stage operational amplifiers also follow the input ends thereof and output the DC or low frequency display driving signal to the connected electrode lines of the column electrodes 1511 and row electrodes 1512 and the common electrodes 1513 of the display screen. During this period, the driving circuit 1520 works completely as an ordinary display driver, the display gating and output circuit 1523 transports the display driving signal to the connected electrode lines of the column electrodes 1511 and row electrodes 1512 and the common electrodes 1513 of the display screen, and the display screen 1510 is in a display driving state.

During the touch detection period, the control circuit 1521 controls the preceding stage circuit to input the high frequency (for example, over 50 kHz) signal to the input ends of the last stage operational amplifiers 15231, 15232, ..., and 1523N, and the output ends of the last stage operational amplifiers also follow the input ends thereof and output the high frequency touch signal to the connected electrode lines of the column electrodes 1511 and row electrodes 1512 and the common electrodes 1513 of the display screen simultaneously. The touch system circuit 1524 judges whether the display screen 1510 is touched and positions of which column and row electrode lines are touched by detecting changes of touch signals on the sampling points 15241, 15242, ..., 1524N disposed at the output ends of the operational amplifiers 15231, 15232, ..., 1523N respectively through simultaneous sampling or scan sampling, and the display screen 1510 is in a touch detection state. The position of the touched point is determined according to the detected intersection point of the touched row electrode line and touched column electrode line.

The touch flat panel display 1500 repeatedly switches between the display driving period and the touch detection period, and the display driving and the touch detection time division multiplex the electrodes of the display screen, thus forming a touch flat panel display which supports both display and touch control.

As for the conditions for judging a touched electrode line, an electrode line through which a detected touch signal with a maximum change exceeding a set threshold flows may be regarded as a touched electrode line; also, instead of regarding the electrode line through which a detected touch signal with a maximum change exceeding a certain threshold flows as a touched electrode line, an electrode line through which a detected touch signal with a change exceeding a set threshold flows may be regarded as a touched electrode line, thus enabling the touch flat panel display to support multi-point touch.

### Sixteenth Embodiment

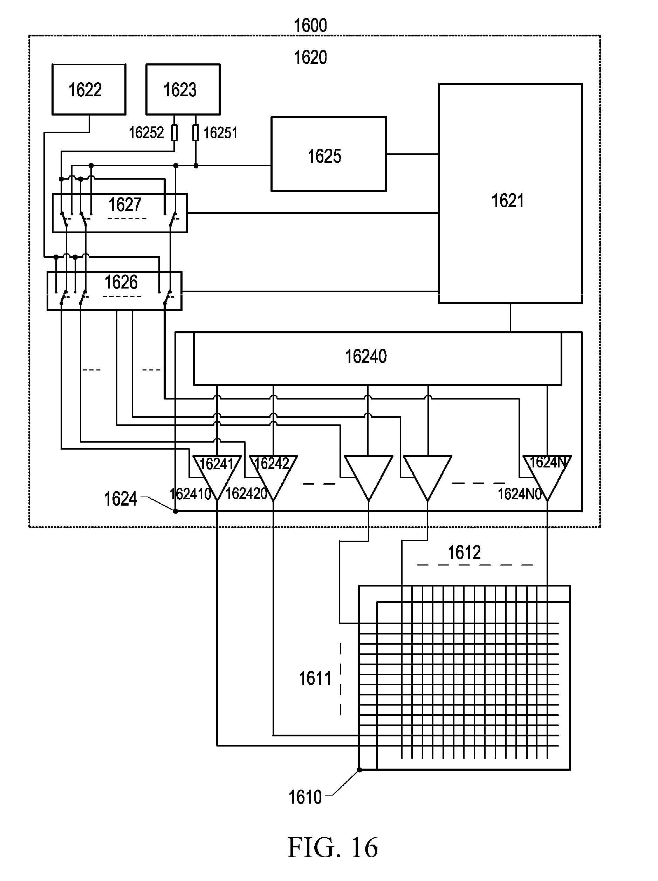

A touch flat panel display 1600 as shown in FIG. 16 includes a passive display screen 1610 and a driving circuit 1620. The driving circuit 1620 includes a control circuit 1621, a display driving source 1622 providing display driving energy, a touch excitation source 1623 providing touch excitation energy, a display gating and output circuit 1624, a touch system circuit 1625, and analog switch groups 1626 and 1627. The display screen 1610 has column electrodes 1611 and row electrodes 1612. The display driving source 1622 uses a DC power supply, and the touch excitation source 1623 uses an AC power supply with a high frequency (for example, over 50 kHz). For operational amplifiers 16241, 16242, ..., and 1624N as last-stage driving cells of the display gating and output circuit 1624, that is, last-stage driving cells of the driving circuit 1620, input ends thereof are connected with a preceding stage circuit 16240, and output ends thereof are connected with electrode lines of the column electrodes 1611 and row electrodes 1612 of the display screen, power ends thereof 162410, 162420, ..., and 1624N0 are connected with output ends of the analog switch group 1626, one input end of each switch of the analog switch group 1626 is connected with the display driving source 1622, and the other input end of each switch of the analog switch group 1626 is connected with an output end of the analog switch group 1627; one input end of each switch of the analog switch group 1627 is connected with the touch excitation source 1623 through a touch signal sampling resistor 16251 of the touch system circuit 1625, and the other input end is connected with the touch excitation source 1623 through a balancing resistor 16252. Detection points are disposed at an end of the touch signal sampling element 16251 connected with the analog switch group 1627, and are connected with the touch system circuit 1625. The touch system circuit 1625 detects changes of potentials on the detection points, and a reference endpoint for potential measurement is disposed at the other endpoint of the touch signal sampling element 16251 (that is, an output end of the touch excitation source 1623), a common ground end of the driving circuit 1620, or a specific reference point of the driving circuit 1620. The control circuit 1621 controls the analog switch groups 1626 and 1627 to enable the power ends 162410, 162420, ..., and 1624N0 of the operational amplifiers 16241, 16242, ..., and 1624N as the last-stage driving cells, to communicate with the display driving source 1622, so as to transport a display driving signal to the connected electrode lines of the column electrodes 1611 and row electrodes 1612 of the display screen; or communicate with the touch excitation source 1623, so as to transport a touch signal to the connected electrode lines of the column electrodes 1611 and row electrodes 1612 of the display screen. Connection lines in FIG. 16 not only represent single line connection, but also represent multiple line connection.

The touch flat panel display works in the following manner.

During the display driving period, the analog switch group 1626 in the driving circuit 1620 enables the power ends 162410, 162420, ..., and 1624N0 of the operational amplifiers 16241, 16242, ..., and 1624N as the last-stage driving cells to communicate with the display driving source 1622, the control circuit 1621 controls the display gating and output circuit 1624 to transport the display driving signal to the connected electrodes 1611 and 1612 of the display screen, and the display screen 1610 is in a display driving state.

During the touch detection period, the control circuit 1621 controls the analog switch group 1626 to enable the power ends 162410, 162420, ..., and 1624N0 of the operational amplifiers 16241, 16242, ..., and 1624N as the last-stage driving cells to communicate with the analog switch group 1627, and then, through the analog switch group 1627, to enable a power end of only one last-stage driving cell or power ends of a plurality of last-stage driving cells each time to communicate with the touch excitation source 1623 through the touch signal sampling resistor 16251; power ends of the other last-stage driving cells communicate with the touch excitation source 1623 through the balancing resistor 16252; the display gating and output circuit 1624 transports the touch signal to the electrode lines of the column electrodes 1611 and row electrodes 1612 of the display screen simultaneously. The touch system circuit 1625 judges whether the display screen 1610 is touched and positions of which column and row electrode lines are touched by detecting the change of the touch signal on the touch signal sampling resistor 16251 successively, and the display screen 1610 is in a touch detection state. The position of the touched point is determined according to the detected intersection point of the touched row electrode line and touched column electrode line.

The touch flat panel display 1600 repeatedly switches between the display driving period and the touch detection period, and the display driving and the touch detection time division multiplex the electrodes of the display screen, thus forming a touch flat panel display which supports both display and touch control.

### Seventeenth Embodiment

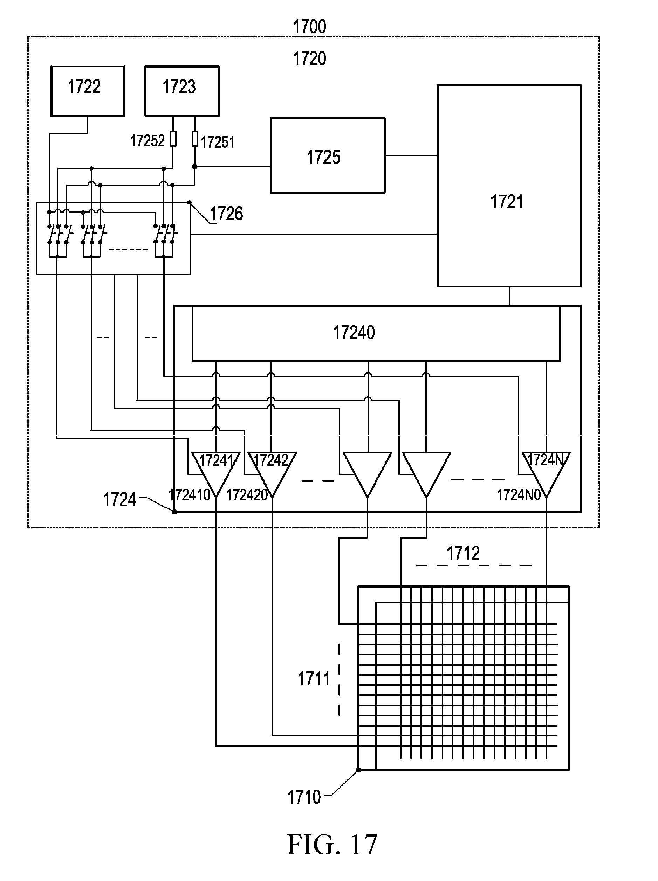

A touch flat panel display 1700 as shown in FIG. 17 includes a passive display screen 1710 and a driving circuit 1720. The driving circuit 1720 includes a control circuit 1721, a display driving source 1722 providing display driving energy, a touch excitation source 1723 providing touch excitation energy, a display gating and output circuit 1724, a touch system circuit 1725, and a display/touch signal gating-switch and output circuit formed by an analog switch group 1726. The analog switch group 1726 is a multi-pole single-throw analog switch group formed by multi-position single-pole single-throw analog switches. The display screen 1710 has column electrodes 1711 and row electrodes 1712. The display driving source 1722 uses a DC power supply, and the touch excitation source 1723 uses an AC power supply with a high frequency (for example, over 50 kHz). For operational amplifiers 17241, 17242, ..., and 1724N as last-stage driving cells of the display gating and output circuit 1724, that is, last-stage driving cells of the driving circuit 1720, input ends thereof are connected with a preceding stage circuit 17240, and output ends thereof are connected with electrode lines of the column electrodes 1711 and row electrodes 1712 of the display screen, power ends thereof 172410, 172420, ..., and 1724N0 are connected with output ends of the analog switch group 1726, one input end of each switch of the analog switch group 1726 is connected with the display driving source 1722, a second input end of each switch of the analog switch group 1726 is connected with the touch excitation source through a balancing element 17252, and a third input end of each switch of the analog switch group 1726 is connected with the touch excitation source through a sampling element 17251. Detection points are disposed at an end of the touch sampling element 17251 connected with the analog switch group 1726, and are connected with the touch system circuit 1725. The touch system circuit 1725 detects changes of potentials on the detection points, and a reference endpoint for potential measurement is disposed at the other endpoint of the touch sampling element 17251 (that is, an output end of the touch excitation source 1723), a common ground end of the driving circuit 1720, or a specific reference point of the driving circuit 1720. The control circuit 1721 controls the analog switch group 1726 to enable the power ends 172410, 172420, ..., and 1724N0 of the operational amplifiers 17241, 17242, ..., and 1724N as the last-stage driving cells, to communicate with the display driving source 1722, so as to transport a display driving signal to the connected electrode lines of the column electrodes 1711 and row electrodes 1712 of the display screen; or communicate with the touch excitation source 1723, so as to transport a touch signal to the connected electrode lines of the column electrodes 1711 and row electrodes 1712 of the display screen. Connection lines in FIG. 17 not only represent single line connection, but also represent multiple line connection.

The touch flat panel display works in the following manner.

During the display driving period, the analog switch group 1726 in the driving circuit 1720 enables the power ends 172410, 172420, ..., and 1724N0 of the operational amplifiers 17241, 17242, ..., and 1724N as the last-stage driving cells to communicate with the display driving source 1722, the control circuit 1721 controls the display gating and output circuit 1724 to transport the display driving signal to the connected electrodes 1711 and 1712 of the display screen, and the display screen 1710 is in a display driving state.

During the touch detection period, the control circuit 1721 controls the analog switch group 1726 to enable the power ends 172410, 172420, ..., and 1724N0 of the operational amplifiers 17241, 17242, ..., and 1724N as the last-stage driving cells to communicate with the touch excitation source 1723 through the balancing element or the sampling element, a power end of only one last-stage driving cell or power ends of a plurality of last-stage driving cells are enabled each time to communicate with the touch excitation source 1723 through the touch sampling element 17251; power ends of the other last-stage driving cells communicate with the touch excitation source 1723 through the balancing element 17252; the display gating and output circuit 1724 transports the touch signal to the electrode lines of the column electrodes 1711 and row electrodes 1712 of the display screen simultaneously. The touch system circuit 1725 judges whether the display screen 1710 is touched and positions of which column and row electrode lines are touched by detecting the change of the touch signal on the touch sampling element 17251, and the display screen 1710 is in a touch detection state. The position of the touched point is determined according to the detected intersection point of the touched row electrode line and touched column electrode line.

The touch flat panel display 1700 repeatedly switches between the display driving period and the touch detection period, and the display driving and the touch detection time division multiplex the electrodes of the display screen, thus forming a touch flat panel display which supports both display and touch control.

### Eighteenth Embodiment

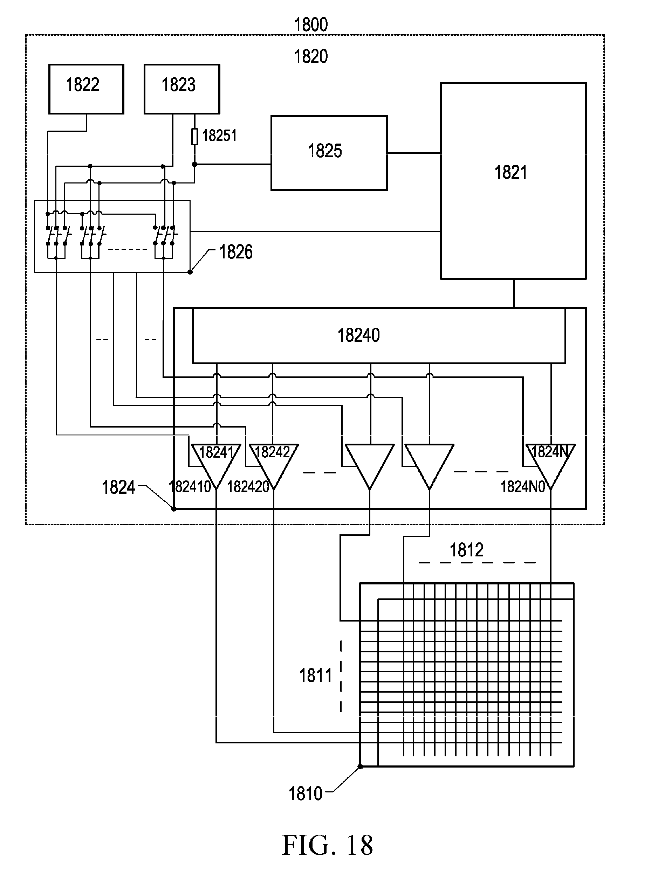

A touch flat panel display 1800 as shown in FIG. 18 includes a passive display screen 1810 and a driving circuit 1820. The driving circuit 1820 includes a control circuit 1821, a display driving source 1822 providing display driving energy, a touch excitation source 1823 providing touch excitation energy, a display gating and output circuit 1824, a touch system circuit 1825, and a display/touch signal gating-switch and output circuit formed by an analog switch group 1826. The analog switch group 1826 is a multi-position multi-pole single-throw analog switch group formed by multi-position single-pole single-throw analog switches. The display screen 1810 has column electrodes 1811 and row electrodes 1812. The display driving source 1822 uses a DC power supply, and the touch excitation source 1823 uses an AC power supply with a high frequency (for example, over 50 kHz). For operational amplifiers 18241, 18242, ..., and 1824N as last-stage driving cells of the display gating and output circuit 1824, that is, last-stage driving cells of the driving circuit 1820, input ends thereof are connected with a preceding stage circuit 18240, and output ends thereof are connected with electrode lines of the column electrodes 1811 and row electrodes 1812 of the display screen, power ends thereof 182410, 182420,..., and 1824N0 are connected with output ends of the analog switch group 1826, one input end of each switch of the analog switch group 1826 is connected with the display driving source 1822, a second input end of each switch of the analog switch group 1826 is connected with the touch excitation source, and a third input end of each switch of the analog switch group 1826 is connected with the touch excitation source through a touch sampling element 18251. Detection points are disposed at an end of the touch sampling element 18251 connected with the analog switch group 1826, and are connected with the touch system circuit 1825. The touch system circuit 1825 detects changes of potentials on the detection points, and a reference endpoint for potential measurement is disposed at the other endpoint of the touch sampling element 18251 (that is, an output end of the touch excitation source 1823), a common ground end of the driving circuit 1820, or a specific reference point of the driving circuit 1820. The control circuit 1821 controls the analog switch group 1826 to enable the power ends 182410, 182420,..., and 1824N0 of the operational amplifiers 18241, 18242,..., and 1824N as the last-stage driving cells, to communicate with the display driving source 1822, so as to transport a display driving signal to the connected electrode lines of the column electrodes 1811 and row electrodes 1812 of the display screen; or communicate with the touch excitation source 1823, so as to transport a touch signal to the connected electrode lines of the column electrodes 1811 and row electrodes 1812 of the display screen. Connection lines in FIG. 18 not only represent single line connection, but also represent multiple line connection.

The touch flat panel display works in the following manner.

During the display driving period, the analog switch group 1826 in the driving circuit 1820 enables the power ends 182410, 182420,..., and 1824N0 of the operational amplifiers 18241, 18242,..., and 1824N as the last-stage driving cells to communicate with the display driving source 1822, the control circuit 1821 controls the display gating and output circuit 1824 to transport the display driving signal to the connected electrodes 1811 and 1812 of the display screen, and the display screen 1810 is in a display driving state.

During the touch detection period, the control circuit 1821 controls the analog switch group 1826 to enable the power ends 182410, 182420,..., and 1824N0 of the operational amplifiers 18241, 18242,..., and 1824N as the last-stage driving cells to communicate with the touch excitation source 1823 directly or through the sampling element, a power end of only one last-stage driving cell or power ends of a plurality of last-stage driving cells are enabled each time to communicate with the touch excitation source 1823 through the touch sampling element 18251; power ends of the other last-stage driving cells directly communicate with the touch excitation source 1823; the display gating and output circuit 1824 transports the touch signal to the electrode lines of the column electrodes 1811 and row electrodes 1812 of the display screen simultaneously. The touch system circuit 1825 judges whether the display screen 1810 is touched and positions of which column and row electrode lines are touched by detecting the change of the touch signal on the touch sampling element 18251 successively, and the display screen 1810 is in a touch detection state. The position of the touched point is determined according to the detected intersection point of the touched row electrode line and touched column electrode line.

The touch flat panel display 1800 repeatedly switches between the display driving period and the touch detection period, and the display driving and the touch detection time division multiplex the electrodes of the display screen, thus forming a touch flat panel display which supports both display and touch control.

### Nineteenth Embodiment

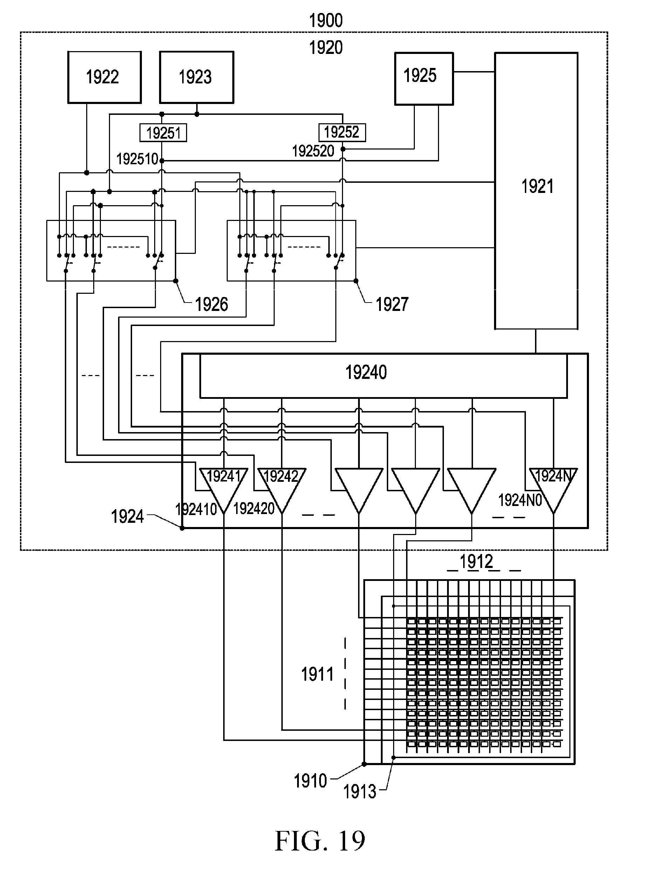

A touch flat panel display 1900 as shown in FIG. 19 includes a TFT active display screen 1910 and a driving circuit 1920. The driving circuit 1920 includes a control circuit 1921, a display driving source 1922 providing display driving energy, a touch excitation source 1923 providing touch excitation energy, a display gating and output circuit 1924, a touch system circuit 1925, and a display/touch signal gating-switch and output circuit formed by analog switch groups 1926 and 1927. The analog switch groups 1926 and 1927 are multi-position single-pole multi-throw analog switch groups. The display screen 1910 has column electrodes 1911, row electrodes 1912, and common electrodes 1913 of a TFT array. For operational amplifiers 19241,..., and 1924N as last-stage driving cells of the display gating and output circuit 1924, that is, last-stage driving cells of the driving circuit 1920, input ends thereof are connected with a preceding stage circuit 19240, output ends thereof are connected with electrode lines of the column electrodes 1911 and row electrodes 1912 and the common electrodes 1913 of the TFT array of the display screen, power ends thereof 192410,..., and 1924N0 are divided into two groups to be connected with output ends of the analog switch groups 1926 and 1927 respectively, one input end of each switch of the analog switch groups 1926 and 1927 is connected with the display driving source 1922, a second input end of each switch of the analog switch groups 1926 and 1927 is connected with the touch excitation source 1923, and a third input end of each switch of the analog switch groups 1926 and 1927 is connected with the touch excitation source 1923 through touch sampling elements 19251 and 19252 of the touch system circuit 1925 respectively. Detection points 192510 and 192520 are disposed at an end of the touch sampling elements 19251 and 19252 connected with the analog switch groups 1926 and 1927, and are connected with the touch system circuit 1925. The touch system circuit 1925 detects changes of potentials on the detection points 192510 and 192520, and a reference endpoint for potential measurement is disposed at the other endpoint of the touch sampling elements 19251 and 19252 (that is, an output end of the touch excitation source 1923), a common ground end of the driving circuit 1920, or a specific reference point of the driving circuit 1920. The control circuit 1921 controls the analog switch groups 1926 and 1927 to enable the power ends 192410,..., and 1924N0 of the operational amplifiers 19241,..., and 1924N as the last-stage driving cells, to communicate with the display driving source 1922, so as to transport a display driving signal to the connected electrode lines of the column electrodes 1911 and row electrodes 1912 and the common electrodes 1913 of the display screen; or communicate with the touch excitation source 1923, so as to transport a touch signal to the connected electrode lines of the column electrodes 1911 and row electrodes 1912 and the common electrodes 1913 of the display screen. Connection lines in FIG. 19 not only represent single line connection, but also represent multiple line connection.

The touch flat panel display works in the following manner.

During the display driving period, the analog switch groups 1926 and 1927 in the driving circuit 1920 enable the power ends 192410, 192420,..., and 1924N0 of the operational amplifiers 19241, 19242,..., and 1924N as the last-stage driving cells to communicate with the display driving source 1922, the control circuit 1921 controls the display gating and output circuit 1924 to transport the display driving signal to the connected electrode lines of the column electrodes 1911 and row electrodes 1912 and the common electrodes 1913 of the display screen, and the display screen 1910 is in a display driving state.

During the touch detection period, the control circuit 1921 controls the analog switch groups 1926 and 1927 to enable the power ends 192410,..., and 1924N0 of the operational amplifiers 19241,..., and 1924N as the last-stage driving cells to be divided into two groups to communicate with the touch excitation source directly or through the touch sampling elements 19251 and 19252 respectively, and the analog switch groups 1926 and 1927 only enable a part of (one or more) power ends in each group each time to communicate with the touch excitation source 1923 through the touch sampling elements 19251 and 19252 respectively; power ends of the other last-stage driving cells directly communicate with the touch excitation source 1923; the display gating and output circuit 1924 transports the touch signal to the electrode lines of the column electrodes 1911 and row electrodes 1912 and the common electrodes 1913 of the display screen simultaneously. The touch system circuit 1925 judges whether the display screen 1910 is touched, which areas are touched and positions of which column and row electrode lines are touched by successively detecting changes of touch signals on the detection points respectively, and implementing touch detection to multiple areas of the display screen 1910 simultaneously, and the display screen 1910 is in a touch detection state. The position of the touched point is determined according to the detected intersection point of the touched row electrode line and touched column electrode line.

The touch flat panel display 1900 repeatedly switches between the display driving period and the touch detection period, and the display driving and the touch detection time division multiplex the electrodes of the display screen, thus forming a touch flat panel display which supports both display and touch control.

Touch detection is implemented simultaneously to multiple areas of the display screen, so as to save time needed for implementing touch detection to the full screen of the display screen.

The above descriptions are merely preferred embodiments of the present invention, and are not intended to limit the scope of the invention. It is apparent to those of ordinary skill in the art that, modifications and variations can be made without departing from the spirit of the present invention, which should be covered in the protection scope of the present invention.

## Claims

1. A touch flat panel display, comprising a display screen and a driving circuit, wherein the driving circuit comprises a display driving circuit and a touch system circuit, and output ends of the driving circuit are connected with electrode lines of the display screen respectively, wherein
a touch excitation source providing touch excitation energy is connected with a power end of a last-stage driving cell of the driving circuit; the last-stage driving cell at least has one active element, and an output end thereof is connected with an electrode line of the display screen; and the touch system circuit judges whether the electrode line of the display screen connected with the driving unit is touched by detecting a change of a touch signal flowing through the power end or the output end of the last-stage driving cell.

2. The touch flat panel display according to claim 1, wherein
the power end of the driving unit in the driving circuit connected with the touch excitation source is a positive power end of the driving unit, or a negative power end of the driving unit.

3. The touch flat panel display according to claim 1, wherein
the power end of the last-stage driving cell in the driving circuit connected with the electrode lines of the display screen are connected with a display driving source providing display driving energy and the touch excitation source providing the touch excitation energy through a display/touch signal gating-switch and output circuit respectively, and the display/touch signal gating-switch and output circuit enables the power end of the driving unit to communicate with the display driving source, so that the driving circuit transmits a display driving signal to the connected electrode line of the display screen; or to communicate with the touch excitation source, so that the driving circuit transmits a touch signal to the connected electrode line of the display screen.

4. The touch flat panel display according to claim 3, wherein
a detection point of the touch system circuit for detecting the touch signal is disposed between the touch excitation source and the display/touch signal gating-switch and output circuit, or disposed between the display/touch signal gating-switch and output circuit and the power end of the driving unit, or disposed between multi-stage multiplexers, or disposed at the output end of the driving unit.

5. The touch flat panel display according to claim 1, wherein
power ends of different driving units in the driving circuit connected with different electrode lines of the display screen are connected with a display driving source providing display driving energy and the touch excitation source providing the touch excitation energy through a display/touch signal loading and merge circuit unit respectively, and the driving circuit transmits a display driving signal and the touch signal to a connected next stage circuit and finally to the electrode lines of the display screen simultaneously.

6. The touch flat panel display according to claim 5, wherein
the display/touch signal loading and merge circuit is connected with the touch excitation source through a signal multiplexer or directly connected with the touch excitation source.

7. The touch flat panel display according to claim 6, wherein
a detection point of the touch system circuit for detecting the touch signal is disposed between the touch excitation source and the display/touch signal loading and merge circuit, or disposed between the signal multiplexer and the display/touch signal loading and merge circuit, or disposed between the display/touch signal loading and merge circuit and the power end of the driving unit, or disposed at the output end of the driving unit.

8. The touch flat panel display according to claim 1, wherein
the touch excitation source providing the touch excitation energy and the display driving source providing the display driving energy share the same power supply, the power end of the driving unit in the driving circuit is connected with a display driving and touch excitation sharing source, and the driving circuit transmits a display driving signal and the touch signal to a connected next stage circuit and finally to the electrode lines of the display screen simultaneously or in different time.

9. The touch flat panel display according to claim 8, wherein
the power end of the driving unit in the driving circuit connected with the electrode line of the display screen is connected with the display driving and touch excitation sharing source through a display/touch signal gating-switch and output circuit or directly connected with the display driving and touch excitation sharing source.

10. The touch flat panel display according to claim 9, wherein
a detection point of the touch system circuit for detecting the touch signal is disposed between the display driving and touch excitation sharing source and a multiplexer, or disposed between the display/touch signal gating-switch and output circuit and the power end of the driving unit, or disposed between the display driving and touch excitation sharing source and the power end of the driving unit, or disposed at the output end of the driving unit.

11. The touch flat panel display according to claim 1, wherein
the display driving and touch excitation sharing source is an independent power supply without being connected with other parts of the driving circuit, or an independent output end in a power output end without being connected with other parts of the driving circuit.

12. The touch flat panel display according to claim 3, 6 or 9, wherein
the display/touch signal gating-switch and output circuit is a single-stage or multi-stage multiplexer at least having one active element.

13. The touch flat panel display according to claim 1, wherein
the touch excitation source is a direct current (DC) power supply, an alternating current (AC) power supply, or a hybrid AC/DC power supply.

14. The touch flat panel display according to claim 13, wherein
when the touch excitation source is a DC power supply, the output end of the last-stage driving cell in the driving circuit outputs a touch signal alternating with an alternating signal of an input end to the electrode line of the display screen.

15. The touch flat panel display according to claim 13, wherein
when the touch excitation source is an AC power supply, the output end of the last-stage driving cell in the driving circuit outputs an alternating touch signal coming from the power end and gated by an input end to the electrode line of the display screen.

16. The touch flat panel display according to claim 1, wherein
a touch signal sampling circuit of the touch system circuit is a passive element, or an active element, or a circuit unit formed by multiple elements.

17. The touch flat panel display according to claim 1, wherein
a frequency of the touch signal output to the electrode line of the display screen by the output end of the last-stage driving cell of the driving circuit is not smaller than 50 kHz.

18. The touch flat panel display according to claim 1, wherein
the touch system circuit detects the touch signal flowing into the power end of the driving unit connected with the touch excitation source by detecting at least one of a current signal and a voltage signal.

19. The touch flat panel display according to claim 1, wherein
the touch system circuit detects the touch signal flowing into the power end of the driving unit connected with the touch excitation source by detecting at least one of amplitude, time, phase, frequency signal, and pulse number.
